# EUROPEAN PATENT SPECIFICATION

(11) **EP 4 184 455 B1**
(45) Date of publication and mention of the grant of the patent: **03.12.2025**
(21) Application number: 22202991.0
(22) Date of filing: 21.10.2022
(51) Int. Cl.: G06V 40/16, G06V 10/22

(54) **APPARATUSES, COMPUTER-IMPLEMENTED METHODS, AND COMPUTER PROGRAM PRODUCTS FOR IMPROVED IDENTITY VERIFICATION USING SENSOR DATA PROCESSING**
VORRICHTUNGEN, COMPUTERIMPLEMENTIERTE VERFAHREN UND COMPUTERPROGRAMMPRODUKTE ZUR VERBESSERTEN IDENTITÄTSÜBERPRÜFUNG MITTELS SENSORDATENVERARBEITUNG
APPAREILS, PROCÉDÉS MIS EN OEUVRE PAR ORDINATEUR ET PRODUITS-PROGRAMMES INFORMATIQUES POUR UNE VÉRIFICATION D'IDENTITÉ AMÉLIORÉE À L'AIDE D'UN TRAITEMENT DE DONNÉES DE CAPTEUR

(30) Priority: 19.11.2021 US 202117455851
(43) Date of publication of application: 24.05.2023
(73) Proprietor: Hand Held Products, Inc., Charlotte, NC 28202 (US)
(72) Inventor: DUNBAR, Blake Edmund, North Carolina, 28202 (US); PIERCE, Robert Mark, North Carolina, 28202 (US); CORT, Emily N., North Carolina, 28202 (US); DRONAMRAJU, Venkat Ratnakar, North Carolina, 28202 (US); FRANZ, Dwight Linwood, North Carolina, 28202 (US); ZHANG, Yang, North Carolina, 28202 (US)
(74) Representative: Haseltine Lake Kempner LLP

(56) References cited:
- US-A1- 2007 003 113
- US-A1- 2007 086 626
- NASER DAMER ET AL: "The Effect of Wearing a Mask on Face Recognition Performance: an Exploratory Study", ARXIV.ORG, CORNELL UNIVERSITY LIBRARY, 201 OLIN LIBRARY CORNELL UNIVERSITY ITHACA, NY 14853, 27 July 2020 (2020-07-27), XP081727739

## Description

### TECHNICAL FIELD

Embodiments of the present disclosure generally relate to performing data-driven user identity validation, and specifically to performing improved data-driven user identity validation utilizing a printed code in contexts where at least a portion of the user's physical feature(s) is/are obfuscated by personal protective equipment.

### BACKGROUND

In various contexts, the identity of a user must be verified for any of a myriad of reasons. Often, a user is identified using conventional feature reading methodologies, such as facial recognition or other physical features read, to accurately identify a user. However, in many circumstances such conventional facial recognition fails to operate accurately or at all, such as where equipment, clothing, and/or other items obfuscate characteristic(s) of the user. Applicant has discovered problems with current implementations of user identity validation. Reference may be made to US 2007/086626 A1 which relates to individual identity authentication systems. Through applied effort, ingenuity, and innovation, Applicant has solved many of these problems by developing the solutions embodied in the present disclosure, the details of which are described further herein.

### BRIEF SUMMARY

The present invention is defined by the appended independent claims to which reference should now be made. Specific embodiments are defined in the dependent claims. In accordance with a first aspect of the present disclosure, a computer-implemented method for improved data-driven user identity validation is provided. The computer-implemented method is performable by one or more specially configured computing device(s) embodied in hardware, software, firmware, and/or any combination thereof, for example as described herein. In one example arrangement the example computer-implemented method includes receiving captured data associated with a user, the captured data including at least imaging data associated with the user. The example computer-implemented method further includes detecting, from the imaging data, machine decodable data associated with the user. The example computer-implemented method further includes determining an asserted user identity associated with the user by decoding the machine decodable data. The example computer-implemented method further includes validating the asserted user identity associated with the user utilizing at least a remaining portion the captured data.

Additionally or alternatively, in some arrangements of the example computer-implemented method, the machine decodable data is visible on at least one item worn by the user, the at least one item worn by the user obfuscates at least one physical characteristic of the user.

Additionally or alternatively, in some arrangements of the example computer-implemented method, the at least one item worn by the user includes at least one piece of personal protective equipment.

Additionally or alternatively, in some arrangements of the example computer-implemented method, the at least one item worn by the user obfuscates a facial feature of the user.

Additionally or alternatively, in some arrangements of the example computer-implemented method, the machine decodable data includes a machine-readable symbology representation, an image, an encoded image, or detectable text data.

Additionally or alternatively, in some arrangements of the example computer-implemented method, validating the asserted user identity associated with the user utilizing at least the remaining portion of the captured data includes detecting user characteristic data representing at least one physical characteristic of the user in the imaging data; comparing the user characteristic data with expected characteristic data associated with the asserted user identity for the at least one physical characteristic; and determining whether the comparison between the user characteristic data and the expected characteristic data indicates a match.

Additionally or alternatively, in some arrangements of the example computer-implemented method, the example computer-implemented method further include the user characteristic data includes facial recognition data associated with a visible portion of a face for the user, where the imaging data includes data representing at least an obfuscated portion of the face of the user.

Additionally or alternatively, in some arrangements of the example computer-implemented method, the user characteristic data includes physical characteristic movement data associated with a nose of the user, at least one eye of the user, a head of the user, or at least one eyebrow of the user.

Additionally or alternatively, in some arrangements of the example computer-implemented method, determining the asserted user identity associated with the user by decoding the machine decodable data includes determining a user identifier by decoding the machine decodable data; and retrieving the asserted user identity from a user repository based at least in part on the user identifier.

Additionally or alternatively, in some arrangements of the example computer-implemented method, validating the asserted user identity associated with the user utilizing at least the remaining portion of the captured data includes detecting background image data in the imaging data; and validating the background image data matches expected background image data.

Additionally or alternatively, in some arrangements of the example computer-implemented method, validating the asserted user identity associated with the user utilizing at least the remaining portion of the captured data includes determining user voice data from the captured data; and validating the user voice data matches expected voice data associated with the asserted user identity.

In accordance with a second aspect of the disclosure, an apparatus for improved data-driven user identity validation is provided. In one example arrangement, the apparatus includes at least one processor and at least one memory having computer-coded instructions stored thereon, where the computer-coded instructions in execution with the at least one processor causes the apparatus to perform any one of the example computer-implemented methods described herein. In a second example arrangement, the apparatus includes means for performing each step of any one of the example computer-implemented methods described herein.

In accordance with a third aspect of the disclosure, a computer program product for improved data-driven user identity validation is provided. In one example arrangement, the computer program product includes at least one non-transitory computer-readable storage medium having computer program code stored thereon that, in execution with at least one processor, configures the computer program product for performing any one of the example computer-implemented method described herein.

### BRIEF DESCRIPTION OF THE DRAWINGS

To easily identify the discussion of any particular element or act, the most significant digit or digits in a reference number refer to the figure number in which that element is first introduced.
FIG. 1 illustrates an example data-driven identity validation system within which embodiments of the present disclosure operate.
FIG. 2 illustrates an example data-driven identity validation apparatus in accordance with at least some example embodiments of the present disclosure.
FIG. 3 illustrates an example marked PPE in accordance with at least some example embodiments of the present disclosure
FIG. 4 illustrates example imaging data processed for user identity verification using at least a machine-readable symbology representation in accordance with at least some example embodiments of the present disclosure.
FIG. 5 illustrates an example visualization of physical user characteristic data processing in accordance with at least some example embodiments of the present disclosure.
FIG. 6 illustrates example imaging data processed for user identity verification using at least background image data in accordance with at least some example embodiments of the present disclosure.
FIG. 7 illustrates example data visualizations in accordance with at least some example embodiments of the present disclosure.
FIG. 8 illustrates a flowchart including example operations of an example process for validating an asserted user identity in accordance with at least some example embodiments of the present disclosure.
FIG. 9 illustrates a flowchart including example operations of an example process for identifying an asserted user identity based at least in part on machine decodable data in accordance with at least some example embodiments of the present disclosure.
FIG. 10 illustrates a flowchart including example operations of an example process for validating an asserted user based at least in part on at least one physical characteristic in accordance with at least some example embodiments of the present disclosure.
FIG. 11 illustrates a flowchart including example operations of an example process for validating an asserted user based at least in part on background image data in accordance with at least some example embodiments of the present disclosure.
FIG. 12 illustrates a flowchart including example operations of an example process for validating an asserted user based at least in part on user voice data in accordance with at least some example embodiments of the present disclosure.

### DETAILED DESCRIPTION

Embodiments of the present disclosure now will be described more fully hereinafter with reference to the accompanying drawings, in which some, but not all, embodiments of the disclosure are shown. Indeed, embodiments of the disclosure may be embodied in many different forms and should not be construed as limited to the embodiments set forth herein, rather, these embodiments are provided so that this disclosure will satisfy applicable legal requirements. Like numbers refer to like elements throughout.

### DEFINITIONS

"Asserted user identity" refers to electronically managed data representing a particular user identity, where the electronically managed data has not yet been validated.

"Background image data" refers to at least a portion of imaging data associated with a background of a user. The background image data includes the portion of the imaging data that represents a user's environment, area, or other surroundings, and does not depict a representation of a portion of the user and/or associated equipment.

"Captured data" refers to any data captured by one or more computing devices that represents an aspect of a user or a user's environment. In some embodiments, captured data is captured by one or more computing device(s) at a location of a user. Non-limiting examples of captured data include image data, video data, audio data, speech data, movement data, physical characteristic data, and data representing a user interaction with one or more object(s).

"Decoding" refers to processing one or more portion(s) of data to extract at least one data value represented by the one or more portion(s) of data. In some embodiments, decoding includes detecting at least one particular portion of data for processing.

"Encoded image" refers to any image that is specially configured utilizing one or more characteristic(s), property/properties, or other computer-detectable features to encode one or more particular data value(s).

"Expected background image data" refers to background image data stored associated with one or more data properties to use during validation of an asserted user identity. **In** some embodiments, expected background image data is stored associated with a particular user identifier or set of user identifiers that the expected background image data is used to validate. **In** some embodiments, expected background image data is stored associated with all validations to be performed.

"Expected characteristic data" refers to user characteristic data stored associated with a particular user identifier that represents one or more physical characteristic(s) of a user corresponding to the user, such user characteristic data to be used during validation of an asserted user identity representing the particular user identifier. **In** some embodiments, expected characteristic data is stored associated with a particular user identifier that the expected characteristic data is used to validate.

"Expected data" refers generally to any stored data associated with a particular user that represents one or more aspect(s) of the user and/or their environment to be used during validation of that user.

"Expected voice data" refers to user voice data stored associated with a particular user identifier that embodies a digital representation of a voice of a user corresponding to the particular user identifier, such user voice data to be used during validation of an asserted user identity representing the particular user identifier.

"Facial feature" refers to a physical characteristic of the head for a particular user.

"Facial recognition data" refers to electronically managed data embodying a digital representation of a facial feature scanned, imaged, or otherwise captured for a particular user. Non-limiting examples of facial recognition data includes a plot of 3D points embodying contours of a face, data denoting facial feature landmark position(s) and/or distance(s) between one another, data representing facial feature(s) determined utilizing image processing, and/or any data utilized in any of the myriad of facial recognition algorithm(s) known in the art.

"Image" refers to electronically managed data embodying a captured representation of a real-world environment. In some embodiments, an image is generated by an image sensor.

"Imaging data" refers to electronically managed data embodying an image, a plurality of images, and/or a video comprising discrete frame(s) that each embody an image.

"Machine decodable data" refers to electronically managed data representing a machine readable machine-readable symbology representation detectable and decodable by one or more computing device(s). Machine decodable data in some embodiments is a discrete, independent data object. In some embodiments, machine decodable data is embodied as a portion of another data object, for example a portion of imaging data.

"Machine-readable symbology representation" refers to a digital representation of any physical or electronic representation of data that is detectable by one or more specially-configured computing device(s) using one or more particular detection algorithm(s), and that is decodable by one or more specially-configured computing device(s) using one or more particular decoding algorithm(s). In some embodiments, a machine-readable symbology representation is detectable and/or decodable by a human as well. In some embodiments, a machine-readable symbology representation is not detectable and/or decodable by a human. Non-limiting examples of a machine-readable symbology representation include a captured image representation of a quick response (QR) code, a barcode, a one-dimensional data encoding, a two-dimensional data encoding, a three-dimensional data encoding, a DataMatrix code, and an Aztec code.

"Marked PPE" refers to one or more piece(s) of personal protective equipment that include printed code(s) that are printed, marked, and/or otherwise visible on the PPE.

"Match" refers to commonality between two data objects that indicates the two data objects are equivalent or otherwise sufficiently satisfies a threshold indicating equivalency of the two data objects. A match between two data objects is determinable based on any custom algorithm particular to the type of data objects being compared.

"Obfuscated portion" refers to a portion of a user's physical characteristic(s) that is/are blocked from the perspective of a sensor. In some embodiments, an obfuscated portion of a user is blocked by one or more piece(s) of personal protective equipment.

"Personal protective equipment" and "PPE" refer to clothing, equipment, or other wearable items that protect the wearer from one or more aspect(s) of the environment. Non-limiting examples of personal protective equipment include a surgical mask, a cloth mask, a gas mask, a flame-resistant garment, an oxygen tank, and an impact-resistant vest.

"Physical characteristic" refers to any physical aspect of a person that is quantifiable by one or more data value(s).

"Physical characteristic movement data" refers to electronically managed data representing speed, position, and/or other determinable movement throughout an interval of time by a physical characteristic and/or one or more portion(s) of a physical characteristic. Non-limiting examples of physical characteristic movement data include data representing the speed of movement of a characteristic, the position change of particular points of a physical characteristic during a particular movement (e.g., an eyebrow raise), and/or data representing a time to complete a particular movement of a physical characteristic (e.g., a single walk cycle).

"Printed code" refers to a visual element representing machine decodable data that is capturable by an image sensor and processable to detect and/or decode the machine decodable data represented thereby. In some embodiments, a printed code is printed on and/or rendered to an article of clothing, piece of equipment, and/or other wearable associated with a user. Non-limiting examples of a printed code include a machine readable symbology, an encoded image, a pattern, a text code, and/or another visually detectable and decodable element printed on a piece of clothing, personal protective equipment, and/or another user wearable.

"Remaining portion of captured data" refers to any portion of captured data determined to fall outside of a portion of data embodying or otherwise identified as part of a machine-readable symbology representation. In some embodiments, a remaining portion of captured data includes any number of sub-portions and/or type(s) of data, including and without limitation remaining portion of imaging data, a remaining portion of audio data, and/or a remaining portion of other sensor data.

"Secured printed code" refers to a printed code that encodes at least a public portion of data and at least a private portion of data, where the private portion of data is decodable with use of one or more secret data value(s).

"User" refers to an entity whose identity is to be verified by one or more computing device(s).

"User characteristic data" refers to electronically managed data that represents captured and/or stored digital representation(s) of one or more aspect(s) of a user.

"User identifier" refers to electronically managed data that uniquely represents a particular user, and/or a user data object (e.g., a profile or account) associated with a particular user.

"User voice data" refers to electronically managed data representing recorded audio of a user's voice. In some embodiments, user voice data is captured via one or more microphone(s) and/or specially configured audio capture device(s).

"Validation" and "validating" with respect to a user refers to a process for determining an identity of the user and/or confirming that an asserted user identity for the user matches the user utilizing one or more data-driven determination(s).

"Validation status" refers to electronically managed data representing whether an asserted user identity has been successfully validated by one or more user identity validation process(es). In some embodiments, a validation status represents a "pending determination" status before a user identity validation process has been completed, and represents a "validated" status if successfully validated by the user identity validation process or a "not validated" status in a circumstance where the user identity validation process is unsuccessful.

"Visible portion" refers to a portion of captured imaging data that represents one or more portion(s) of a user distinct from obfuscated portion(s) of the user. In some embodiments, a representation of the visible portion of a user is used to identify, detect, and/or extract data representing any number of physical characteristic(s) present in the visible portion.

### OVERVIEW

In various contexts, systems face increasing difficulties identifying a particular user and/or validating that identity. For example, often a system attempts to validate a user's identity utilizing facial recognition algorithms that map a user's face. Often, a user's face may be obfuscated or blocked entirely, however, thus causing such systems to face significant difficulties or fail entirely. Such contexts are especially present in the age of personal protective equipment being worn by increasingly more people for increased protection from airborne viruses and other environmental risks. Additionally, in several high-risk contexts, users wear particular garments, personal protective equipment, and/or the like that cannot be removed easily, safely, or at all to perform the identity validation. In this regard, conventional systems and algorithms for validating a user's identity using facial recognition fail to perform sufficiently in several such contexts, including where PPE obfuscates one or more feature(s)/characteristic(s) of a user.

Embodiments of the present disclosure provide for improved user identity validation utilizing machine decodable data. The machine decodable data is extractable from captured data, for example from imaging data captured via one or more sensor(s). The machine decodable data encodes an asserted user identity that identifies a particular user. In some embodiments, the machine decodable data is embodied by one or more printed code(s) on clothing, equipment, and/or other outer-layers of the user to enable sensor(s) (e.g., image sensors) to capture representations of the printed code(s). In this regard, during validation of the user's identity by a system, the system may capture data to enable detection, extraction, and/or processing of the machine decodable data for user identity validation.

Embodiments of the present disclosure further provide for any of a myriad of additional processing for validation of an asserted user identity, such as a user identity determined from machine decodable data. In this regard, embodiments are capable of identifying an asserted user identity based at least in part on machine decodable data extracted from a representation of a printed code. Some embodiments further perform any of a myriad of additional validation steps utilizing physical characteristics and/or feature(s) of the user that remain detectable regardless of equipment, clothing, and/or the like obfuscating other physical characteristics and/or feature(s) of the user that would conventionally be utilized for identity validation. For example, in a circumstance where a surgical mask is worn by a user for protection from airborne disease, embodiments of the present disclosure provide for user identity validation utilizing validation of physical characteristic(s) from a visible portion of the user, validation of non-visual data (e.g., user voice data), and/or the like. Additionally or alternatively, some embodiments provide for validation of a user identity based at least in part on non-user data as well, for example background image data and/or the like at the time a user is attempting to validate their identity.

Embodiments of the present disclosure provide a myriad of technical advantages in various technical fields, and address various technical issues in various technical fields. Some embodiments of the present disclosure utilize a printed code visually detectable and/or decodable to determine an asserted user identity for a particular user without requiring any input by the user. In this regard, some embodiments of the present disclosure perform user identity validation automatically in a sensor data-driven manner with reduced (or no) user input. Additionally or alternatively, some embodiments of the present disclosure utilize an asserted user identity in combination with one or more additional process(es) to accurately validate a user's identity. Some such embodiments accurately provide user identity validation utilizing characteristic(s) of the user that remain accessible over and/or separate from wearable item(s) (e.g., personal protective equipment, clothing, and/or the like), where conventional user identification algorithms such as conventional facial recognition traditionally fail due to obfuscated feature(s) of the user. Additionally or alternatively still, by utilizing sensor(s) already ubiquitous in most mobile devices (e.g., camera(s), microphone(s), and/or the like), some embodiments of the present disclosure enable performance of improved data-driven identity validation in circumstances where conventional methodologies would fail without requiring alteration to the underlying hardware architecture of such device(s).

### EXAMPLE SYSTEM AND APPARATUSES OF THE DISCLOSURE

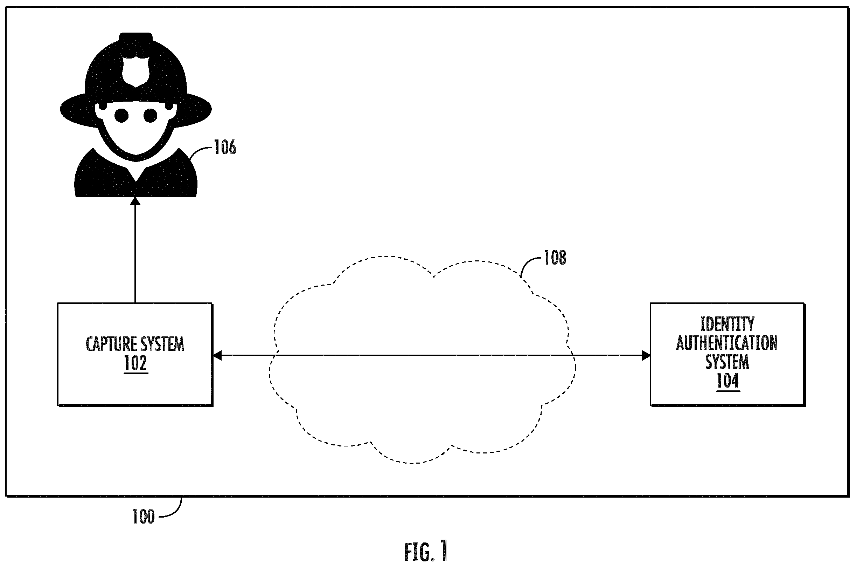

FIG. 1 illustrates an example data-driven identity validation system within which embodiments of the present disclosure operate. Specifically, FIG. 1 illustrates an example a data-driven identity validation system 100 including a capture system 102, an identity authentication system 104, and a user 106 whose identity is to be validated. In this regard, the components of the data-driven identity validation system 100 interact in the embodiments described herein to capture, parse, extract, and/or sufficiently process data associated with the user 106 to accurately validate the identity of the user 106.

In some embodiments, the identity authentication system 104 is embodied separately from the capture system 102, for example such that the capture system 102 and the identity authentication system 104 communicate over a communications network 108. For example, in some embodiments the capture system 102 is embodies one or more computing device(s) that capture and/or store captured data for transmission and processing by a central system that performs user identity validation, such as the identity authentication system 104. In this regard, in some such embodiments the capture system 102 includes reduced computing power, such as reduced hardware capacity in terms of processing power, memory storage, and/or the like, sufficient for data capture. Further, the identity authentication system 104 in some such embodiments includes additional computing power to facilitate more complex processing operations, such as algorithmic process(es) for performing the user identity verification as described herein. In other embodiments, the identity authentication system 104 and the capture system 102 is/are embodied by the same computing system and/or device(s). For example, in some embodiments, the identity authentication system 104 and the capture system 102 are embodied by a single system or computing device, for example a user device specially configured by hardware, software, firmware, and/or a combination thereof, to perform the operations described herein. It will be appreciated that, in some such embodiments, the identity authentication system 104 and the capture system 102 need not communicate over the communications network 108, and instead may communicate via software, localized hardware, and/or the like.

The user 106 embodies an entity whose identity is to be validated by the data-driven identity validation system 100. **In** some embodiments, the user 106 embodies a human whose identity is to be validated for any of a myriad of purposes. **In** some contexts, the identity of the user 106 is validated for purposes of determining whether the user 106 should be granted access to particular computing device(s) and/or data (e.g., by granting access to a user device currently in possession of the user 106, for example embodied by the capture system 102). For example, the user 106 may attempt to gain access to a mobile smartphone, or other computing device, owned by the user 106, and the user identity validation described herein in some such embodiments is performed to grant access only to particular determined user(s). In another example context, the identity of the user 106 is validated for purposes of determining whether to provide one or more determination(s) for user consideration (e.g., to a guard responsible for restricting access to a physical area to certain users) and/or to initiate one or more system-controlled process(es) (e.g., to open a gate to grant the user 106 access to a physical area if validated as a certain whitelisted user identity). Alternatively or additionally, in some embodiments, the identity of the user 106 is validated for purposes of providing particular data output to the user 106 and/or a corresponding device based on the identity of the user 106. For example, in some embodiments, the identity of the user 106 is validated to provide particular data stored associated with a user identifier corresponding to the user's identity to the user 106 (e.g., via one or more user interface(s)) or provided to an associated computing device for further processing.

In some embodiments, the capture system 102 includes one or more computing device(s) embodied in hardware, software, firmware, and/or the like that enables capture of data in a particular environment. For example, in some embodiments, the capture system 102 captures imaging data representing one or more visual aspect(s) of an environment. Alternatively or additionally, in some embodiments the capture system 102 captures audio data from an environment. Additionally or alternatively still, in some embodiments the capture system 102 captures any of a myriad of other types of data to be used in one or more operations for performing user identity validation as described herein. Non-limiting examples of such additional types of data include movement data, temperature data, range data, and/or the like.

In some embodiments, the capture system 102 includes or is embodied by at least one mobile computing device. For example, in some embodiments, the capture system 102 is embodied by a smartphone device controlled by the user 106. Alternatively or additionally, in some contexts, the capture system 102 is embodied by a mobile scanning device (e.g., a barcode scanner) or other enterprise mobile device utilized for performing one or more enterprise task(s)). In some other embodiments, the capture system 102 includes or is embodied by at least one fixed computing device. For example, in some embodiments the capture system 102 is embodied by one or more sensor(s) and/or device(s) embodying a scanning station at a particular environment that a user, such as the user 106, interacts with to perform a particular task (e.g., to perform user identity validation for purposes of entering an area at a checkpoint station, receiving data output based on user identity, and/or the like). In one such example context, the capture system 102 includes one or more image and/or video capture device(s) that capture imaging data representing at least the user and/or surrounding environment for purposes of performing user identity validation as described herein.

In some embodiments, the identity authentication system 102 includes one or more computing device(s) embodied in hardware, software, firmware, and/or a combination thereof, that performs one or more process(es) for performing data-driven user identity validation as described herein. In some embodiments, the identity authentication system 104 includes a backend system configured to provide such functionality for one or more edge device(s) that capture data for use in performing the user identity validation. For example, in some such embodiments, the identity authentication system 102 includes one or more backend server(s) communicable with at least the capture system 102 to receive captured data from the capture system 102 and/or provide the results of user identity validation process(es) described herein. Alternatively, in some embodiments, the identity authentication systems 104 includes or otherwise is embodied by one or more subsystem(s) a single system further embodying the capture system 102 as well. For example, in some embodiments, the identity authentication system 104 is embodied by a specially configured software module of an end-user mobile device that includes subsystem(s) embodying both the capture system 102 and the identity authentication system 104.

In any such embodiments, the identity authentication system 104 may include one or more data repository/repositories specially configured to maintain data associated with user identities and/or performing data-driven user identity verification as described herein. For example, in some embodiments, the identity authentication system 104 includes a data repository embodied in hardware, software, firmware, and/or a combination thereof, that stores user identity data embodying and/or otherwise including information associated with a particular user, feature characteristic(s) associated with the particular user, operations data associated with the user, and/or the like. It will be appreciated that any such data may be associated with a user identifier corresponding to a particular user identity. For example, in some embodiments, the identity authentication system 104 includes a data repository that stores data utilized to provide and/or perform one or more function(s), service application(s), and/or the like, utilized by the user 106. In some embodiments, the identity authentication system 104 includes a plurality of data repositories, or a data repository including a plurality of sub-repositories, that store different portion(s) of the data utilized to provide the functionality described herein.

The optional communications network 108 in some embodiments is embodied in any of a myriad of network configurations. In some embodiments, the communications network 108 embodies a public network (e.g., the Internet). In some embodiments, the communications network 108 embodies a private network (e.g., an internal, localized, or closed-off network between particular devices). In some other embodiments, the communications network 108 embodies a hybrid network (e.g., a network enabling internal communications between particular connected devices and external communications with other devices). The communications network 108 in some embodiments includes one or more base station(s), relay(s), router(s), switch(es), cell tower(s), communications cable(s) and/or associated routing station(s), and/or the like. In some embodiments, the communications network 108 includes one or more user controlled computing device(s) (e.g., a user owner router and/or modem) and/or one or more external utility devices (e.g., Internet service provider communication tower(s) and/or other device(s)).

The computing device(s) each may communicate over a whole or a portion of one or more communications networks, such as the communications networks 108. For example, each of the components of the system communicatively coupled to transmit data to and/or receive data from, for example, one another over the same or different wireless or wired networks embodying the communications networks 108. Such configuration(s) include, without limitation, a wired or wireless Personal Area Network (PAN), Local Area Network (LAN), Metropolitan Area Network (MAN), Wide Area Network (WAN), and/or the like. Additionally, while FIG. 1 illustrate certain system entities as separate, standalone entities communicating over the communications network 108, the various embodiments are not limited to this particular architecture. In other embodiments, one or more computing entities share one or more components, hardware, and/or the like, or otherwise are embodied by a single computing device such that connection(s) between the computing entities are over the communications network 108 are altered and/or rendered unnecessary.

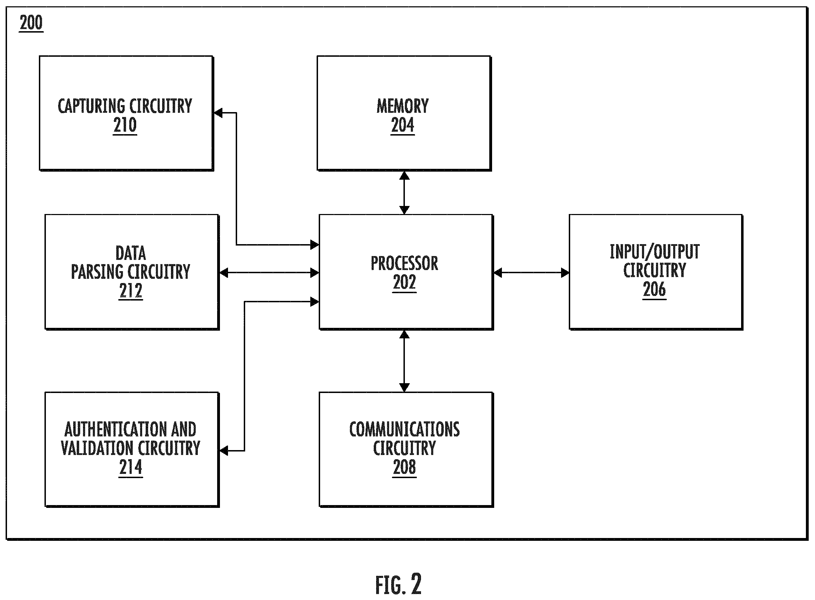

FIG. 2 illustrates an example data-driven identity validation apparatus in accordance with at least some example embodiments of the present disclosure. Specifically, FIG. 2 depicts an example data-driven identity validation apparatus 200 specially configured in accordance with at least some example embodiments of the present disclosure. In some embodiments, the identity authentication system 104 and/or a portion thereof is embodied by one or more system(s), such as the data-driven identity validation apparatus 200 as depicted and described in FIG. 2. Alternatively or additionally, in some embodiments, a single computing system embodying a combination of the capture system 102 and the identity authentication system 104 is embodied by one or more computing device(s), such as the data-driven identity validation apparatus 200 as depicted and described in FIG. 2. The data-driven identity validation apparatus 200 includes processor 202, memory 204, input/output circuitry 206, communications circuitry 208, optional capturing circuitry 210, data parsing circuitry 212, and authentication and validation circuitry 214. In some embodiments, the data-driven identity validation apparatus 200 is configured, using one or more of the sets of circuitry 202, 204, 206, 208, 210, 212, and/or 214, to execute and perform the operations described herein.

In general, the terms computing entity (or "entity" in reference other than to a user), device, system, and/or similar words used herein interchangeably may refer to, for example, one or more computers, computing entities, desktop computers, mobile phones, tablets, phablets, notebooks, laptops, distributed systems, items/devices, terminals, servers or server networks, blades, gateways, switches, processing devices, processing entities, set-top boxes, relays, routers, network access points, base stations, the like, and/or any combination of devices or entities adapted to perform the functions, operations, and/or processes described herein. Such functions, operations, and/or processes may include, for example, transmitting, receiving, operating on, processing, displaying, storing, determining, creating/generating, monitoring, evaluating, comparing, and/or similar terms used herein interchangeably. In one embodiment, these functions, operations, and/or processes can be performed on data, content, information, and/or similar terms used herein interchangeably. **In** this regard, the data-driven identity validation apparatus 200 embodies a particular, specially configured computing entity transformed to enable the specific operations described herein and provide the specific advantages associated therewith, as described herein.

Although components are described with respect to functional limitations, it should be understood that the particular implementations necessarily include the use of particular computing hardware. It should also be understood that in some embodiments certain of the components described herein include similar or common hardware. For example, in some embodiments two sets of circuitry both leverage use of the same processor(s), network interface(s), storage medium(s), and/or the like, to perform their associated functions, such that duplicate hardware is not required for each set of circuitry. The use of the term "circuitry" as used herein with respect to components of the apparatuses described herein should therefore be understood to include particular hardware configured to perform the functions associated with the particular circuitry as described herein.

Particularly, the term "circuitry" should be understood broadly to include hardware and, in some embodiments, software for configuring the hardware. For example, in some embodiments, "circuitry" includes processing circuitry, storage media, network interfaces, input/output devices, and/or the like. Alternatively or additionally, in some embodiments, other elements of the data-driven identity validation apparatus 200 provide or supplement the functionality of another particular set of circuitry. For example, the processor 202 in some embodiments provides processing functionality to any of the sets of circuitry, the memory 204 provides storage functionality to any of the sets of circuitry, the communications circuitry 208 provides network interface functionality to any of the sets of circuitry, and/or the like.

In some embodiments, the processor 202 (and/or co-processor or any other processing circuitry assisting or otherwise associated with the processor) is/are in communication with the memory 204 via a bus for passing information among components of the allocation modeling apparatus 200. In some embodiments, for example, the memory 204 is non-transitory and may include, for example, one or more volatile and/or non-volatile memories. In other words, for example, the memory 204 in some embodiments includes or embodies an electronic storage device (e.g., a computer readable storage medium). In some embodiments, the memory 204 is configured to store information, data, content, applications, instructions, or the like, for enabling the data-driven identity validation apparatus 200 to carry out various functions in accordance with example embodiments of the present disclosure.

The processor 202 may be embodied in a number of different ways. For example, in some example embodiments, the processor 202 includes one or more processing devices configured to perform independently. Additionally or alternatively, in some embodiments, the processor 202 includes one or more processor(s) configured in tandem via a bus to enable independent execution of instructions, pipelining, and/or multithreading. The use of the terms "processor" and "processing circuitry" should be understood to include a single core processor, a multi-core processor, multiple processors internal to the allocation modeling apparatus 200, and/or one or more remote or "cloud" processor(s) external to the allocation modeling apparatus 200.

In an example embodiment, the processor 202 is configured to execute instructions stored in the memory 204 or otherwise accessible to the processor. Alternatively or additionally, the processor 202 in some embodiments is configured to execute hard-coded functionality. As such, whether configured by hardware or software methods, or by a combination thereof, the processor 202 represents an entity (e.g., physically embodied in circuitry) capable of performing operations according to an embodiment of the present disclosure while configured accordingly. Alternatively or additionally, as another example in some example embodiments, when the processor 202 is embodied as an executor of software instructions, the instructions specifically configure the processor 202 to perform the algorithms embodied in the specific operations described herein when such instructions are executed.

As one particular example embodiment, the processor 202 is configured to perform various operations associated with data-drive user identity validation, for example to accurately perform user identity validation when a user is wearing particular personal protective equipment. In some embodiments, the processor 202 includes hardware, software, firmware, and/or a combination thereof, that receives captured data associated with a user. Additionally or alternatively, in some embodiments, the processor 202 includes hardware, software, firmware, and/or a combination thereof, that detects, from at least a portion of imaging data in the captured data, machine decodable data associated with the user. Additionally or alternatively, in some embodiments, the processor 202 includes hardware, software, firmware, and/or a combination thereof, that determines an asserted user identity associated with the user based at least in part on the machine decodable data. Additionally or alternatively, in some embodiments, the processor 202 includes hardware, software, firmware, and/or a combination thereof, that validates the asserted user identity utilizing at least a remaining portion of the captured data.

In some embodiments, the data-driven identity validation apparatus 200 includes input/output circuitry 206 that provides output to the user and, in some embodiments, to receive an indication of a user input. In some embodiments, the input/output circuitry 206 is in communication with the processor 202 to provide such functionality. The input/output circuitry 206 may comprise one or more user interface(s) and in some embodiments includes a display that comprises the interface(s) rendered as a web user interface, an application user interface, a user device, a backend system, or the like. In some embodiments, the input/output circuitry 206 also includes a keyboard, a mouse, a joystick, a touch screen, touch areas, soft keys a microphone, a speaker, or other input/output mechanisms. The processor 202 and/or input/output circuitry 206 comprising the processor may be configured to control one or more functions of one or more user interface elements through computer program instructions (e.g., software and/or firmware) stored on a memory accessible to the processor (e.g., memory 204, and/or the like). In some embodiments, the input/output circuitry 206 includes or utilizes a user-facing application to provide input/output functionality to a client device and/or other display associated with a user.

In some embodiments, the data-driven identity validation apparatus 200 includes communications circuitry 200. The communications circuitry 208 includes any means such as a device or circuitry embodied in either hardware or a combination of hardware and software that is configured to receive and/or transmit data from/to a network and/or any other device, circuitry, or module in communication with the data-driven identity validation apparatus 200. In this regard, in some embodiments the communications circuitry 208 includes, for example, a network interface for enabling communications with a wired or wireless communications network. Additionally or alternatively in some embodiments, the communications circuitry 208 includes one or more network interface card(s), antenna(s), bus(es), switch(es), router(s), modem(s), and supporting hardware, firmware, and/or software, or any other device suitable for enabling communications via one or more communications network(s). Additionally or alternatively, the communications circuitry 208 includes circuitry for interacting with the antenna(s) and/or other hardware or software to cause transmission of signals via the antenna(s) or to handle receipt of signals received via the antenna(s). In some embodiments, the communications circuitry 208 enables transmission to and/or receipt of data from a client device, capture device, and/or other external computing device in communication with the data-driven identity validation apparatus 200.

The capturing circuitry 210 includes hardware, software, firmware, and/or a combination thereof, that supports various functionality associated with capturing particular data for processing during data-driven user identity validation, as described herein. For example, in some embodiments, the capturing circuitry 210 includes one or more camera(s), image sensor(s), microphone(s) and/or other audio sensor(s), and/or other sensor(s) for capturing particular determinable aspects of an environment and/or object(s) therein (e.g., characteristic(s) of a user within the environment). Additionally or alternatively, in some embodiments, the capturing circuitry 210 includes hardware, software, firmware, and/or the like, that activates one or more sensor(s) for capturing and/or otherwise generating captured data representing such aspect(s) of the environment monitored by the sensor(s). Additionally or alternatively, in some embodiments, the capturing circuitry 210 includes hardware, software, firmware, and/or the like, that pre-processes captured data for transmission and/or processing for data-driven user identity validation. Additionally or alternatively, in some embodiments, the capturing circuitry 210 includes hardware, software, firmware, and/or the like, that parse(s) and/or extract(s) particular data portion(s) from captured data. In some embodiments, the capturing circuitry 210 generates and/or stores captured data associated with timestamp data and/or other metadata that provides further context into the time, nature, and/or other determinable aspect(s) of the captured data. In some embodiments, capturing circuitry 210 includes a separate processor, specially configured field programmable gate array (FPGA), or a specially programmed application specific integrated circuit (ASIC).

It will be appreciated that, in some embodiments, the data-driven identity validation apparatus 200 does not perform the operations for capturing the captured data for processing. Instead, in some embodiments, the data-driven identity validation apparatus 200 receives the captured data for processing, for example from one or more external capture system(s). In this regard, in some embodiments the data-driven identity validation apparatus 200 does not include any data-driven identity validation apparatus 200.

The data parsing circuitry 212 includes hardware, software, firmware, and/or a combination thereof, that supports various functionality associated with extracting and/or parsing particular portion(s) of captured data for further processing during data-driven identity validation as described herein. For example, in some embodiments, the data parsing circuitry 212 includes hardware, software, firmware, and/or any combination thereof, that parses captured data into various portion(s) of data based on data type (e.g., a first portion for audio data, a second portion for imaging data, and the like). Additionally or alternatively, in some embodiments, authentication and validation circuitry 214 includes hardware, software, firmware, and/or any combination thereof, that detects particular portion(s) of imaging data representing a machine-readable symbology representations corresponding to machine decodable data. Additionally or alternatively, in some embodiments, authentication and validation circuitry 214 includes hardware, software, firmware, and/or any combination thereof, that decodes detected machine decodable data, for example corresponding to a particular machine-readable symbology representation. Additionally or alternatively, in some embodiments, authentication and validation circuitry 214 includes hardware, software, firmware, and/or any combination thereof, that identifies a remaining portion of captured data not utilized during determination of an asserted user identity. In some embodiments, the data parsing circuitry 212 includes a separate processor, specially configured field programmable gate array (FPGA), or a specially programmed application specific integrated circuit (ASIC).

The authentication and validation circuitry 214 includes hardware, software, firmware, and/or a combination thereof, that supports various functionality associated with performing one or more process(es) to validate a user identity. In some embodiments, the authentication and validation circuitry 214 automatically accepts an asserted user identity for a particular user, such as in contexts where the data-driven identity validation apparatus 200 is located in a secure environment. In some other embodiments, for example, the authentication and validation circuitry 214 validates whether the user's identity matches an asserted user identity based at least in part on one or more additional process(es) utilizing captured data.

In some embodiments, the authentication and validation circuitry 214 includes hardware, software, firmware, and/or a combination thereof, that identifies and/or otherwise retrieves one or more expected data portion(s) representing reference data corresponding to a particular asserted user. Additionally or alternatively, in some embodiments, authentication and validation circuitry 214 includes hardware, software, firmware, and/or any combination thereof, that compares captured data embodying a particular type of data (e.g., user voice data, background image data, user characteristic data, and/or the like) with one or more corresponding expected data portion(s) for a particular asserted user identity (e.g., expected voice data, expected background image data, expected characteristic data, and/or the like). For example, in some embodiments, the authentication and validation circuitry 214 includes hardware, software, firmware, and/or any combination thereof, that compares user characteristic data identified from a remaining portion of captured data with expected characteristic data corresponding to an identified asserted user identity, compares user voice data identified from a remaining portion of captured data with expected voice data corresponding to an identified asserted user identity, and/or compares background image data identified from a remaining portion of captured data with expected background image data corresponding to an identified asserted user identity. Additionally or alternatively, in some embodiments, authentication and validation circuitry 214 includes hardware, software, firmware, and/or any combination thereof, that determines and/or outputs a validation status indicating whether an asserted user identity was successfully validated or not validated. In some embodiments, the authentication and validation circuitry 214 includes a separate processor, specially configured field programmable gate array (FPGA), or a specially programmed application specific integrated circuit (ASIC).

Additionally or alternatively, in some embodiments, two or more of the sets of circuitries 202-214 are combinable. Alternatively or additionally, in some embodiments, one or more of the sets of circuitry perform some or all of the functionality described associated with another component. For example, in some embodiments, two or more of the sets of circuitry 202-214 are combined into a single module embodied in hardware, software, firmware, and/or a combination thereof. Similarly, in some embodiments, one or more of the sets of circuitry, for example the capturing circuitry 210, the data parsing circuitry 212, and/or the authentication and validation circuitry 214, is/are combined with the processor 202, such that the processor 202 performs one or more of the operations described above with respect to each of these sets of circuitry 210-214.

### EXAMPLE PRINTED CODE IMPLEMENTATIONS OF THE DISCLOSURE

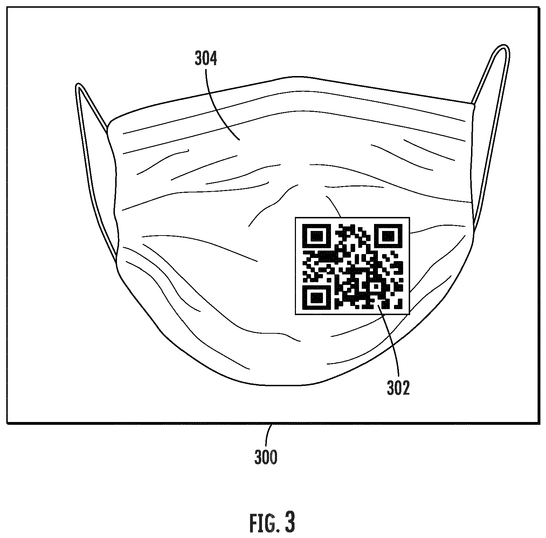

FIG. 3 illustrates an example marked PPE in accordance with at least some example embodiments of the present disclosure. Specifically, FIG. 3 depicts a marked personal protective equipment ("marked PPE") 300. The marked PPE 300 embodies a face mask to be worn over a user's nose and mouth. The marked PPE 300 includes ear cords for looping around the user's ear to secure the face mask on the user's face. In this regard, when properly worn by a user the marked PPE 300 obstructs one or more physical characteristics of the user, for example facial feature(s) including the user's mouth, portions of the user's face, and at least some of the user's nose. It will be appreciated that the depicted face mask is exemplary, and various face masks may be used as known.

By obfuscating portions of the user's face, it will be appreciated that the marked PPE 300 prevents conventional user identity validation algorithm(s) from accurately functioning. For example, facial recognition algorithms that conventionally attempt to map and/or analyze the user's face will be blocked by the marked PPE 300, thus preventing the facial recognition algorithms from accurately functioning. Alternative methodologies instead are required to accurately perform user identity validation, for example embodied by the data-drive user identity validation process(es) described herein utilizing a printed code.

As depicted, the marked PPE 300 includes a printed code that is printed on the face mask. Specifically, the marked PPE 300 includes a printed code embodying a machine readable symbology 302. In some embodiments, a printed code is printed on the marked PPE 300 utilizing any of a myriad of methods, for example by printing the printed code on the PPE, silkscreening, direct part marking, and/or other printing methodologies known the relevant arts for printing on various types of PPE. It will be appreciated that other types of marked PPE or other user wearable(s) may similarly be marked with a printed code, including but without limitation other user clothing, a helmet, and/or the like.

In some embodiments, the printed code is specific to a particular user, such that the printed code embodies data representing a particular user identity. For example, in some embodiments the machine readable symbology 302 encodes a particular user identifier and/or other data uniquely identifying a particular user identity. In this regard, the machine readable symbology 302 in some such embodiments is specially designed and/or generated to represent the corresponding user identity to be associated with the marked PPE 300. A user wearing the marked PPE 300 may engage with one or more system(s) described herein to initiate user identity validation based at least in part on the machine readable symbology 302. In this regard, the machine readable symbology 302 in some such contexts represents and/or is usable to determine an asserted user identity, where the asserted user identity represents the user identity represented by the machine readable symbology 302. In some embodiments, a user initiates a data-driven user identity validation process based at least in part on the machine readable symbology 302 by positioning the machine readable symbology 302 in a manner that is capturable by one or more system(s), such as a capture system 102 as depicted and described with respect to FIG. 1. Alternatively or additionally, in some embodiments, a user initiates a data-driven user identity validation process via user input, for example to a capture system 102 and/or identity authentication system 104, while the machine readable symbology 302 is positioned to be captured by one or more system(s) such as the capture system 102.

It will be appreciated that other types of printed codes may similarly be utilized in other embodiments of the marked PPE 300. For example, in some other embodiments, the marked PPE 300 includes one or more encoded image(s), symbol(s), and/or other type of machine readable symbology. Other embodiments of marked PPE include any printed code detectable and/or decodable utilizing one or more image processing algorithm(s), for example based on color, size, pattern, and/or other visual features utilized to encode data corresponding to a user identifier for a particular user identity.

In other embodiments, a plurality of users share associations with a single printed code. For example, in some embodiments, the machine readable symbology 302 corresponds to a particular group, title, and/or set of user identities. In one example context, users associated with certain permissions are represented by a first user identifier representing a first user identity (e.g., "basic users"), users associated with advanced permissions are represented by a second user identifier representing a second user identity (e.g., "advanced users"), and users associated with top-level permissions are represented by a third user identifier representing a third user identity (e.g., "administrative users").

Upon particular user input, detecting the printed code, and/or the like, some embodiments of the present disclosure initiate one or more process(es) for data-driven user identity validation. In this regard, the machine readable symbology 302 in some embodiments embodies a trigger that initiates such process(es). In other embodiments, the machine readable symbology 302 is utilized to provide an asserted user identity utilized as a data identifier from which reference data (e.g., expected data values) can be determined for use in validating the asserted user identity.

In some embodiments, a marked PPE such as the marked PPE includes a secured printed code. In some embodiments, the secured printed code represents at least a portion of public data and at least a portion of private data. In some such embodiments, the public data is readily decodable from a captured representation of the printed code. The private data in some embodiments is encrypted, such that corresponding data (e.g., a private key, passcode, and/or the like) is required to sufficiently decrypt and access the private data in a usable form. In some embodiments, the private key or other secret data utilized to access the private portion of data in the secured printed code is maintained by the data-driven identity validation apparatus 200, for example for use in determining a corresponding asserted user identity, and/or perform one or more validation(s) associated with an asserted user. Alternatively or additionally, in some embodiments, the data-driven identity validation apparatus 200 derives the private key or other secret data utilized to access the private portion of data in the secured printed code based at least in part on captured data. For example, in some embodiments, data representing one or more position(s), size(s), and/or other determinable attributes for a physical characteristic in a visible portion of the user, and/or determinable attributes for a physical characteristic during a particular action being performed by the user, is utilized to algorithmically derive a private key utilized to attempt to decrypt the private data portion of the secured printed code. Non-limiting examples of a secured printed code include a secure quick response code (QSRC) that includes at least a portion of public data decodable utilizing any known QR decoding algorithm, and a portion of private data that requires additional, secret data (e.g., a private key) to access and decrypt.

In some embodiments, the secured printed code includes an encrypted portion of personal data associated with a user. For example, in some embodiments, the encrypted portion of data includes a name, age, race, other biographical information, and/or the like, corresponding to a particular user identifier with which the secured printed code is associated. Additionally or alternatively, in some embodiments, the secured printed code represents an asserted user identity, such that decoding of the secured printed code by an intended system (e.g., that stores the private key for a user or a plurality of users) enables determination of an asserted user identity based at least in part on such data. In this regard, such use of the encrypted portion of data embodied in the secured printed code reduces the likelihood that personal data for a particular user is exposed to unintended third-parties during periods of time where a user is wearing equipment with a printed code on it.

### EXAMPLE DATA OBJECT AND PROCESSING VISUALIZATIONS OF THE DISCLOSURE

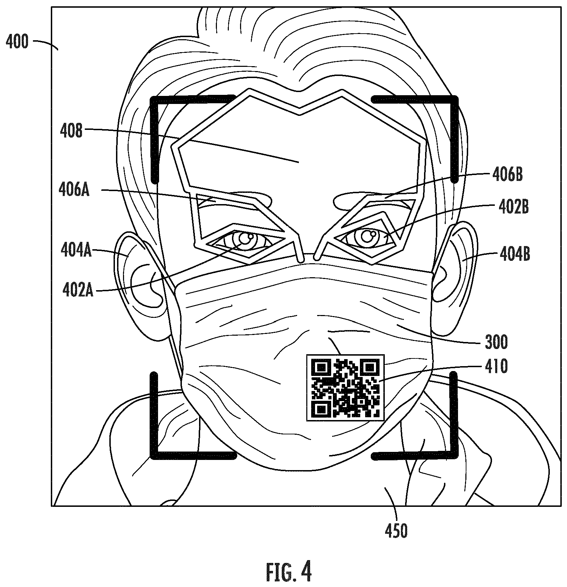

FIG. 4 illustrates example imaging data processed for user identity verification using at least a machine-readable symbology representation in accordance with at least some example embodiments of the present disclosure. Specifically, FIG. 4 depicts imaging data 400, which includes visual representations of a face for a user 450, the user's face obfuscated by a marked PPE mask embodied by marked PPE 300. In some embodiments, the imaging data 400 is captured via one or more image sensor(s) of a computing device, for example the capture system 102 depicted in FIG. 1. In some embodiments, the imaging data 400 is captured utilizing an image sensor of a user's mobile device (e.g., a smartphone), for example during a process initiated to gain access to the mobile device. For example, in some embodiments, the user 450 lifts the phone and positions it to view the user's face to facilitate capture of the imaging data 400. In some embodiments, the imaging data 400 is captured by a stationary and/or fixed capture system, for example at a checkpoint.

In some embodiments, the imaging data 400 is processed to detect and/or parse various portions of the imaging data. In some such embodiments, separate portion(s) of the imaging data 400 is/are parsed for different purposes and/or steps in a process to identify and/or validate an asserted user identity. For example, in some embodiments, the data-driven identity validation apparatus 200 receives the imaging data 400 as part of captured data, which may be captured by the data-driven identity validation apparatus 200 and/or received from an associated system (e.g., a capture system 102). In some embodiments, the data-driven identity validation apparatus 200 processes the imaging data 400 to detect, parse, and/or extract a machine-readable symbology representation within the imaging data 400. For example, as depicted, the machine-readable symbology representation 410 corresponds to a captured representation of the machine readable symbology 302 on the marked PPE 300. In this regard, the data-driven identity validation apparatus 200 in some embodiments utilizes one or more detection algorithm(s) to detect, parse, and/or otherwise extract the machine-readable symbology representation 410. In some such embodiments the data-driven identity validation apparatus 200 further processes the machine-readable symbology representation 410 to determine machine decodable data represented thereby, and/or decodes such machine decodable data utilizing one or more decoding algorithm(s) corresponding to the type of machine readable symbology.

Additionally or alternatively, in some embodiments, the data-driven identity validation apparatus 200 processes the imaging data 400 to identify any number of remaining portions of the imaging data 400. For example, in some embodiments, the data-driven identity validation apparatus 200 processes the imaging data 400 to identify particular portion(s) corresponding to physical characteristic(s) of the user 450. As depicted, such data includes eye characteristic representation 402a and eye characteristic representation 402b, ear characteristic representation 404a and ear characteristic representation 404b, eyebrow characteristic representation 406a and eyebrow characteristic representation 406b, and/or forehead characteristic representation 408. As depicted, the remaining portions of imaging data (e.g., not corresponding to the captured representation of the marked PPE 300 and/or machine readable symbology 302 printed thereon) correspond to visible portions of the user's face while wearing the marked PPE 300. In some embodiments, the data-driven identity validation apparatus 200 is specially configured to utilize one or more feature recognition algorithm(s) that detect the portions of the imaging data 400 that correspond to particular representations of the physical characteristics of the user 450. In some embodiments, one or more known algorithm(s) for detecting and/or extracting portions of imaging data corresponding to a particular physical characteristic is/are utilized to detect and/or extract the portions of the imaging data 400 utilized in one or more operations in a performed data-driven process for validating a user identity. It will be appreciated that in some embodiments, any physical characteristic detectable from imaging data 400 may be utilized in a data-driven process for validating a user identity as described herein.

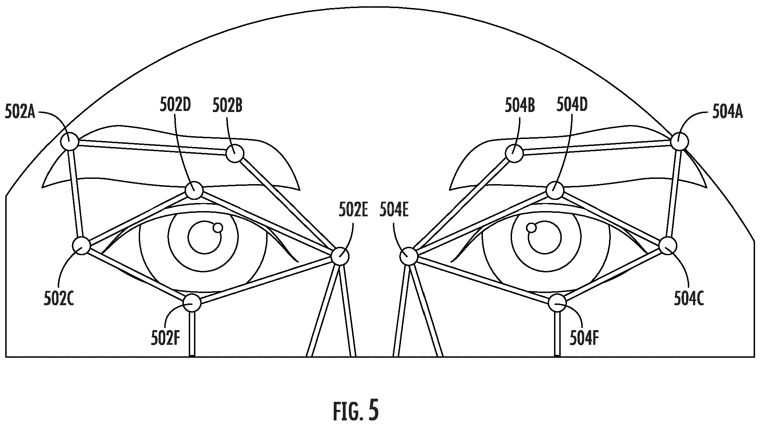

FIG. 5 illustrates an example visualization of physical user characteristic data processing in accordance with at least some example embodiments of the present disclosure. Specifically, FIG. 5 depicts various feature points 502a-502f defining portions of the imaging data 400 corresponding to the eye characteristic representation 402a and various feature points 504a-504f defining portions of the imaging data 400 corresponding to the eye characteristic representation 402b. The feature points 502a-502f and feature points 504a-504f are detectable from the imaging data 400 as depicted and described with respect to FIG. 4.

In some embodiments, the feature points 502a-502f are determined utilizing one or more image processing algorithm(s) specially configured to detect and/or parse data associated with a particular physical characteristic of a user, for example the user's eyes and/or eyebrows. In this regard, in some embodiments a specially configured image processing algorithm is implemented that detects edges of a particular feature (e.g., based at least in part on changes in brightness, color, and/or edge detection methodologies known in the art). In some embodiments, one or more machine learning model(s), algorithmic model(s), artificial intelligence model(s), and/or the like are specially trained and utilized to identify the representation of the particular characteristic and/or determine the feature points that correspond to the representation of the physical characteristic.

Some embodiments store user characteristic data embodying representation(s) of physical characteristic(s) for a particular user during registration and/or set up of a user's identity. In some embodiments, the data-driven identity validation apparatus 200 stores expected characteristic data representing physical characteristics of the user that validly corresponds to a particular user identifier embodying a user identity. For example, in some embodiments the data-driven identity validation apparatus 200 stores feature points 502a-502f and/or feature points 502a-502f associated with the user identifier corresponding to the user 450 as expected characteristic data for the eye physical characteristics of the user 450 during user identity registration. In this regard, the expected characteristic data representing feature points of eye physical characteristics for the user 450 are usable as a reference for comparison with subsequently captured user characteristic data to determine whether such subsequently captured user characteristic data sufficiently matches the expected characteristic data.

It will be appreciated that, in some embodiments, any number of physical characteristic(s) are detected from imaging data and/or other captured data and stored as expected data a particular user identifier representing a user identity. In this regard, embodiments of the present disclosure subsequently may process captured data during data-driven user identity validation to determine whether such subsequently captured data representing a physical characteristic of a user sufficiently matches the expected data for the user. Using an asserted user identity, for example determined from a representation of a printed code in captured imaging data, such as a machine-readable symbology representation, embodiments of the present disclosure are configured to determine the stored expected characteristic data corresponding to the asserted user identity. Such expected user characteristic data is processable to determine whether subsequently captured data representing such captured representations of the physical characteristics of a user asserting to correspond to the asserted user identity sufficiently match the expected characteristic data for the user actually corresponding to the asserted user identity.

With respect to FIG. 5 for example, in a circumstance where the user 450 is registered associated with the user identifier encoded by the machine readable symbology 302 and expected characteristic data corresponding to the eyes of user 450 is stored associated with said user identifier, the data-driven identity validation apparatus 200 determines the feature points 502a-502f and feature points 504a-504f sufficiently matches such expected characteristic data to validate that the user 450 does correspond to the asserted user identity represented by the machine readable symbology 302. In a circumstance where the user 450 is registered associated with another user identifier (e.g., not encoded by the 302), different expected characteristic data corresponding to the eye physical characteristics of another user would be identified for comparison, and the data-driven identity validation apparatus 200 would determine the feature points 502a-502f and 504a-504f do match the expected characteristic data. In this regard, validating matches between expected characteristic data representing a physical characteristic stored during registration and user characteristic data determined from captured data representing a physical characteristic of a user to be validated associated with an asserted user identity embodies one example additional subprocess of a process for data-driven user identity validation.

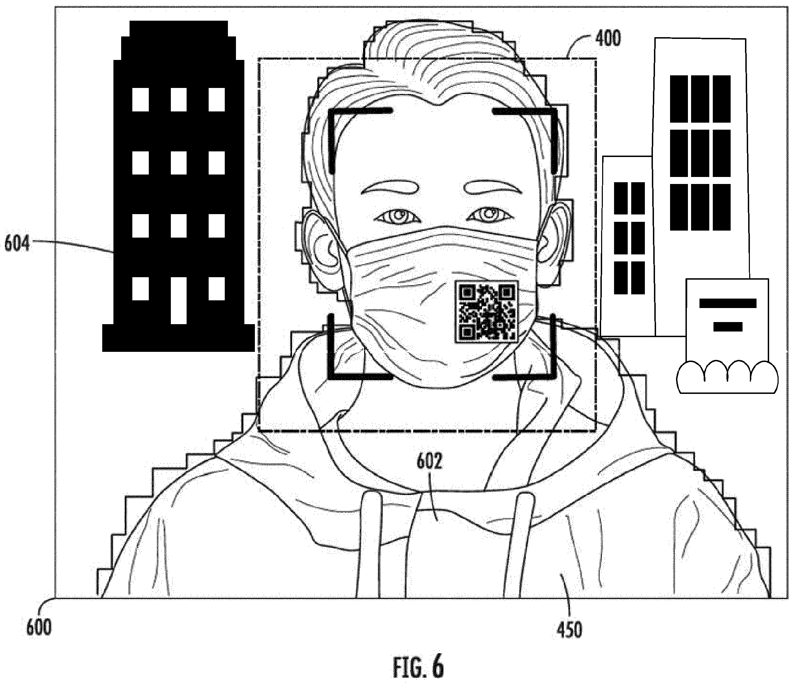

FIG. 6 illustrates example imaging data processed for data-driven user identity verification using at least background image data in accordance with at least some example embodiments of the present disclosure. Specifically, FIG. 6 depicts a portion of captured data embodied by imaging data 600. The imaging data 600 includes at least the imaging data 400 as well as some additional imaging data, such that the imaging data 600 embodies a larger image captured of the user 450. It will be appreciated that, in some embodiments, the imaging data 600 and the imaging data 400 are captured by different imaging sensors of one or more embodiments herein, for example of the data-driven identity validation apparatus 200 embodying the capture system 102. In some such embodiments, the imaging data 400 is captured by a first image sensor with a narrower field and/or higher resolution to enable improved accuracy for processing the captured imaging data to detect and/or decode a captured representation of a printed code. Additionally, in some such embodiments, the imaging data 600 is captured by a second image sensor with a wider field to enable processing of additional imaging data, for example for purposes of background data processing as described herein. In some other embodiments, the data-driven identity validation apparatus 200 captures only imaging data 600, and processes the imaging data 600 both to detect and/or decode a particular representation of a printed code (e.g., machine-readable symbology representation 410) and to process one or more additional portions of the imaging data 600 for an additional validation step (e.g., validating a physical characteristic, validating background image data, and/or the like).

As illustrated, the imaging data 600 includes background image data 604. In some embodiments, data-driven identity validation apparatus 200 detects and/or otherwise parses the background image data 604 as separate from the representation of the user 450 captured in the imaging data 600. For example, in some embodiments, data-driven identity validation apparatus 200 processes the imaging data 600 utilizing one or more image processing algorithm(s), object detection algorithm(s), edge detection algorithm(s), specially trained machine learning model(s), and/or the like to identify the portion of the imaging data 600 depicting the user 450. In this regard, in some embodiments the data-driven identity validation apparatus 200 determines the background image data 604 by determining the remaining portion of the imaging data 600 once the portion of data corresponding to the user 450 is extracted. As depicted, the portion of imaging data 602 corresponding to the user 450 is thereby extracted to identify the remaining portion of data embodying the background image data 604.

In some embodiments, the background image data 604 is processed during a process for data-driven user identity validation to determine whether or not to validate a user's identity as corresponding to a particular asserted user identity. For example, in some embodiments, a user identifier embodying a particular asserted user identity is associated with expected background image data. The expected background image data in some embodiments corresponds to a visual representation of a location at which a user is expected to be when validating their identity as described herein. In some embodiments, the expected background image data is stored during user registration, for example when a user is associated with a particular user identifier and expected data is stored associated therewith. Alternatively or additionally, in some embodiments, the expected background image data is uploaded and/or otherwise stored by one or more user(s) (e.g., administrative user's and/or the user with which the expected background image data is to be associated) at another time. Alternatively or additionally still, in some embodiments, the expected background image is determinable based at least in part by one or more determinable factor(s), including and without limitation, time of day, day of week, date, number of prior validation(s), and/or the like.

In some embodiments, the background image data 604 is processed in a manner similar to user characteristic data represented in captured imaging data. For example, in some embodiments, expected background image data is retrieved based at least in part on an asserted user identity determined from a representation of a printed code in the imaging data 400. In some such embodiments, the background image data 604 captured at or near the time that user identity validation is to occur is compared with the expected background image data to determine whether such data matches.

It will be appreciated that the background image data validation operations described herein in some embodiments are utilized in addition to the user characteristic data validation operations described herein with respect to one or more physical characteristics of a user. In some other embodiments, the background image data validation operations described herein are utilized alternatively to the user characteristic data validation operations described herein.

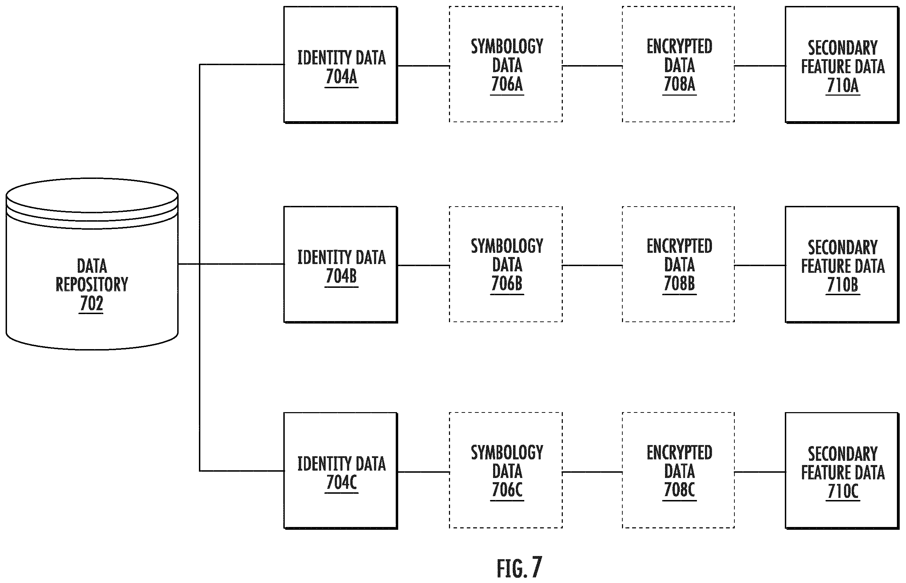

FIG. 7 illustrates example data visualizations in accordance with at least some example embodiments of the present disclosure. Specifically, FIG. 7 illustrates an example visualization of data object(s) and/or value(s) stored in a data repository 702 for use in performing data-driven user identity validation in accordance with at least some example embodiments of the present disclosure. In some embodiments, for example, the data-driven identity validation apparatus 200 maintains the data repository 702 and/or data therein for use in attempting to validate an asserted user identity for a particular user.

In some embodiments, the data repository 702 includes data associated with any of a myriad of users. In one example context, a user registers with the data-driven identity validation apparatus 200 to enable validation of the user's identity via the data-driven identity validation apparatus 200. In some such embodiments, during registration of a new user, the data-driven identity validation apparatus 200 generates a new user identifier corresponding to the new user and associates one or more portion(s) of data to be utilized to validate the user's identity. For example, in one example context, the data-driven identity validation apparatus 200 receives captured data associated with the new user being registered, and stores one or more portion(s) of the captured data during registration as expected data for one or more data properties.

In some embodiments, the data-driven identity validation apparatus 200 receives at least captured data comprising one or more portion(s) of imaging data, where the imaging data include(s) user characteristic data representing of one or more physical characteristic(s) of the new user. In some such embodiments, the data-driven identity validation apparatus 200 stores the user characteristic data as expected characteristic data associated with the user identifier for the new user. In this regard, such data is retrievable at a subsequent time for use in validating an asserted user identity based on corresponding user characteristic data subsequently captured for the user asserting to correspond to the user identifier associated with such data during registration. In some such embodiments, the one or more portion(s) of captured data includes physical characteristic movement data stored as expected characteristic movement data for one or more physical characteristic(s) and/or action(s). It will be appreciated that in some embodiments different portions of user characteristic data is stored, with each portion of user characteristic data corresponding to a particular physical characteristic and/or action.

In some embodiments, the data-driven identity validation apparatus 200 receives at least captured data comprising one or more portion(s) of imaging data, where the imaging data include(s) background image data representing a background of the environment in which the new user is to be located when requesting their identity to be validated. In some such embodiments, the data-driven identity validation apparatus 200 stores the background image data as expected background image data associated with the user identifier for the new user. In this regard, such data is retrievable at a subsequent time for use in validating an asserted user identity based on corresponding background image data subsequently captured for the user asserting to correspond to the user identifier associated with such data during registration.

In some embodiments, the data-driven identity validation apparatus 200 receives at least captured data comprising one or more portion(s) of audio data, where the audio data includes user voice data representing recorded speech of the new user being registered. In some such embodiments, the data-driven identity validation apparatus 200 stores the user voice data as expected voice data associated with the user identifier for the new user. In this regard, such data is retrievable at a subsequent time for use in validating an asserted user identity based on corresponding user voice data subsequently captured for the user asserting to correspond to the user identifier associated with such data during registration.

In some embodiments, the data-driven identity validation apparatus 200 generates and/or outputs one or more prompt(s) (e.g., via a graphical user interface, text interface, audio message, and/or the like) that instructs the user to speak a particular word, phrase, and/or the like during registration. In some such embodiments, the audio recording of the user speaking the prompted word, phrase, and/or the like is captured as captured audio data. Such captured audio data is stored as expected voice data associated with a user identifier corresponding to that user, such that it may be retrieved and utilized to validate a user's speaking of the same word, phrase, and/or the like at a future time (and/or detect when another user is asserting a false asserted user identity that does not belong to them). In some embodiments, the data-driven identity validation apparatus 200 stores the word, phrase, and/or the like that the user was prompted to speak. Alternatively or additionally, in some embodiments, the data-driven identity validation apparatus 200 maintains a predetermined and/or static word, phrase, and/or the like utilized to prompt the user.

As illustrated, the data repository 702 includes various data stored associated with each user registered with the data-driven identity validation apparatus 200. The data repository 702 includes identity data 704a-704c, optional symbology data 706a-706c, optional encrypted data 708a-708c, and/or secondary feature data 710a-710c. In some embodiments, each set of data represents all data corresponding to a particular user and a particular user identifier corresponding to said particular user. For example, in some embodiments, the identity data 704a, symbology data 706a, encrypted data 708a, and secondary feature data 710a all correspond to a first user and user identifier, while identity data 704b, symbology data 706b, encrypted data 708b, and secondary feature data 710b all correspond to a second user and user identifier, and so on for identity data 704c, symbology data 706c, encrypted data 708c, and secondary feature data 710c. It will be appreciated that the data repository 702 may store data associated with any number of users and corresponding user identifiers, and accordingly the limited amount of users depicted in FIG. 7 is merely exemplary and for purposes of simplifying the description of the disclosure without undue repetition. Accordingly, such aspects should not limit the scope of the claimed invention.

In some embodiments, the identity data for a particular user (e.g., identity data 704a, identity data 704b, and identity data 704c) includes at least a user identifier that uniquely represents a particular user. In some embodiments each user identifier is a unique global identifier comprising a numeric, alphanumeric, or other text string. Additionally or alternatively, in some embodiments, the identity data includes biographical data associated with the particular user corresponding to the user identifier, including and without limitation a user's first name, last name, address, age, title, contact information (email, phone, and/or the like), and/or the like. In some embodiments, the identity data for a particular user is aggregated and stored during registration for personalizing one or more aspect(s) provided functionality and/or access.

In some embodiments, the symbology data for a particular user (e.g., symbology data 706a, symbology data 706b, and symbology data 706c) includes at least information associated with detecting and/or decoding particular printed code(s) associated with the user. For example, in some embodiments, the symbology data for a particular data includes data indicating a particular detecting algorithm and/or decoding algorithm utilized to detect and/or decode machine decodable data associated with the user identity. Alternatively or additionally, in some embodiments, the symbology data 706a includes one or more private key(s) and/or other secret data utilized to decrypt at least a portion of data associated with a corresponding secured printed code.

In some embodiments, the encrypted data for a particular user (e.g., encrypted data 708a, encrypted data 708b, and encrypted data 708c) includes encrypted information to be read (e.g., detected and decoded) from a captured representation of a secured printed code. In some such embodiments, the data-driven identity validation apparatus 200 compares data decoded from reading machine decodable data associated with a representation of a secured printed code during validation of a user with the encrypted data corresponding to a particular asserted user identity. For example, in some embodiments the asserted user identity is identified from a public portion of data in the secured printed code. In some embodiments, the secondary feature data for a particular user (e.g., secondary feature data 710a, secondary feature data 710b, and/or secondary feature data 710c) includes one or more portion(s) of captured data associated with the user during registration. The secondary feature data for a particular user in some embodiments embodies and/or includes expected data for comparison to one or more corresponding portion(s) of captured data during validation of a particular asserted user identity by a user at a future time. For example, in some embodiments the secondary feature data includes expected voice data, expected characteristic data (including data representing aspect(s) of a particular physical characteristic and/or physical characteristic movement data associated with a particular action), expected background image data, and/or the like.

### EXAMPLE PROCESSES OF THE DISCLOSURE

Having described example systems and apparatuses, printed code implementations, and data objects and data processing visualizations in accordance with the disclosure, example processes of the disclosure will now be discussed. It will be appreciated that each of the flowcharts depicts an example computer-implemented process that is performable by one or more of the apparatuses, systems, devices, and/or computer program products described herein, for example utilizing one or more of the specially configured components thereof.

The blocks indicate operations of each process. Such operations may be performed in any of a number of ways, including, without limitation, in the order and manner as depicted and described herein. In some embodiments, one or more blocks of any of the processes described herein occur in-between one or more blocks of another process, before one or more blocks of another process, in parallel with one or more blocks of another process, and/or as a sub-process of a second process. Additionally or alternatively, any of the processes in various embodiments include some or all operational steps described and/or depicted, including one or more optional blocks in some embodiments. With regard to the flowcharts illustrated herein, one or more of the depicted block(s) in some embodiments is/are optional in some, or all, embodiments of the disclosure. Optional blocks are depicted with broken (or "dashed") lines. Similarly, it should be appreciated that one or more of the operations of each flowchart may be combinable, replaceable, and/or otherwise altered as described herein.

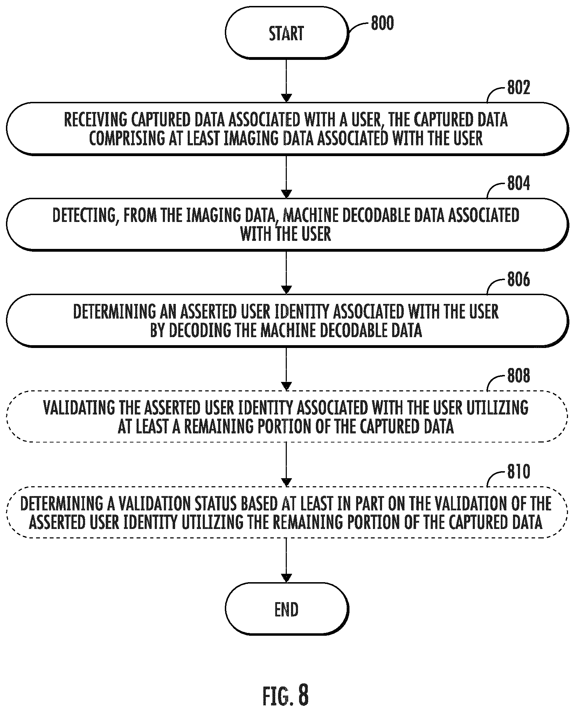

FIG. 8 illustrates a flowchart including example operations of an example process for validating an asserted user identity in accordance with at least some example embodiments of the present disclosure. Specifically, FIG. 8 depicts operations of an example process 800. In some embodiments, the process 800 is embodied by computer program code stored on a non-transitory computer-readable storage medium of a computer program product configured for execution to perform the process as depicted and described. Alternatively or additionally, in some embodiments, the process 800 is performed by one or more specially configured computing devices, such as the data-driven identity validation apparatus 200 alone or in communication with one or more other component(s), device(s), system(s), and/or the like. In this regard, in some such embodiments, the data-driven identity validation apparatus 200 is specially configured by computer-coded instructions (e.g., computer program instructions) stored thereon, for example in the memory 204 and/or another component depicted and/or described herein and/or otherwise accessible to the data-driven identity validation apparatus 200, for performing the operations as depicted and described. In some embodiments, the data-driven identity validation apparatus 200 is in communication with one or more external apparatus(es), system(s), device(s), and/or the like, to perform one or more of the operations as depicted and described. For example, the data-driven identity validation apparatus 200 in some embodiments is in communication with an end-user computing device and/or a capture system, such as the capture system 102.. For purposes of simplifying the description, the process 800 is described as performed by and from the perspective of the allocation modeling apparatus 200.

The process 800 begins at operation 802. At operation 802, the data-driven identity validation apparatus 200 includes means such as the authentication and validation circuitry 214, the data parsing circuitry 212, the capturing circuitry 210, the communications circuitry 208, the input/output circuitry 206, the processor 202, and/or the like, or a combination thereof, to receive captured data associated with a user. In some such embodiments, the user represents a physical entity whose identity is to be identified and/or validated. In some embodiments, the captured data includes one or more data portion(s) captured via sensor(s) of and/or associated with the data-driven identity validation apparatus 200. In some embodiments, the captured data includes at least captured imaging data associated with the user. For example, the imaging data in some embodiments represents data output by an image sensor exposed to the user to capture a visual representation of the user, the user's equipment, clothing, environment, and/or the like.

In some embodiments, the data-driven identity validation apparatus 200 receives the captured data by capturing the captured data itself. For example, in some embodiments, the data-driven identity validation apparatus 200 includes one or more sensor(s) that each capture at least a portion of the captured data. In some such embodiments, the data-driven identity validation apparatus 200 activates the one or more sensor(s) to receive the captured data as output from such sensor(s). For example, in some embodiments, the data-driven identity validation apparatus 200 includes at least an image sensor that captures the imaging data for processing. Alternatively or additionally, in some embodiments, the data-driven identity validation apparatus 200 receives some or all of the captured data from one or more external device(s), for example from a separate capture system.

Additionally or alternatively, in some embodiments, the data-driven identity validation apparatus 200 receives the captured data in response to user input. For example, in some embodiments, a user requesting validation of their identity provides user input via the data-driven identity validation apparatus 200 and/or an associated system to initiate the process 800. Alternatively or additionally, in some embodiments, the data-driven identity validation apparatus 200 automatically initiates the process 800. For example, in some such embodiments, the data-driven identity validation apparatus 200 is continuously capturing new data for processing, and discards the captured data in circumstances where machine decodable data is not yet detected. In this regard, in some such embodiments the process 800 initiates without requiring explicit user input to the data-driven identity validation apparatus 200 and/or a related system (e.g., a capture system 102).

At operation 804, the data-driven identity validation apparatus 200 includes means such as the authentication and validation circuitry 214, the data parsing circuitry 212, the capturing circuitry 210, the communications circuitry 208, the input/output circuitry 206, the processor 202, and/or the like, or a combination thereof, to detect, from the imaging data of the captured data, machine decodable data associated with the user. In some embodiments, the machine decodable data corresponds to a particular representation of a printed code represented in the captured imaging data. In some embodiments, the printed code is positioned on a marked PPE worn by the user, such that the representation of the printed code includes a detectable and/or decodable representation of the printed code. In some embodiments, the data-driven identity validation apparatus 200 utilizes one or more detection algorithm(s) to detect the portion of the imaging data that represents the machine decodable data. For example, in some embodiments, the machine decodable data is identified based at least in part on a finder pattern, color detection, and/or any custom algorithm for detecting a portion of data within an image.

At operation 806, the data-driven identity validation apparatus 200 includes means such as the authentication and validation circuitry 214, the data parsing circuitry 212, the capturing circuitry 210, the communications circuitry 208, the input/output circuitry 206, the processor 202, and/or the like, or a combination thereof, to determine an asserted user identity associated with the user. In some embodiments, the asserted user identity is determined by decoding the machine decodable data. In some embodiments, the data-driven identity validation apparatus 200 is specially configured to utilize a determined decoding algorithm to decode the machine decodable data, for example in some contexts where the data-driven identity validation apparatus 200 is designed to detect and process a particular type of printed code represented by the machine decodable data, such as a machine readable symbology, encoded image, image, pattern, and/or the like. Alternatively or additionally, in some embodiments, the data-driven identity validation apparatus 200 determines a particular decoding algorithm to utilize for decoding the machine decodable data. For example, in some embodiments, the data-driven identity validation apparatus 200 identifies a type of printed code represented by the machine decodable data by identifying one or more characteristic(s) of the machine decodable data and determining the type of printed code associated with such characteristic(s).

In some embodiments, the asserted user identity is accepted as the user's identity, automatically validating the asserted user identity as trusted. In some embodiments, for example where increased security in validating a user's identity is desirable, one or more additional validation operation(s) and/or sub-process(es) is/are performed as described herein.

At optional operation 808, the data-driven identity validation apparatus 200 includes means such as the authentication and validation circuitry 214, the data parsing circuitry 212, the capturing circuitry 210, the communications circuitry 208, the input/output circuitry 206, the processor 202, and/or the like, or a combination thereof, to validate the asserted user identity associated with the user utilizing at least a remaining portion of the captured data. In this regard, such validation(s) in some embodiments each embody an additional validation sub-process based on at least some of the remaining portion of the captured data. For example, in some embodiments, data associated with one or more physical characteristics of the user (e.g., represented by a particular portion of the remaining portion of captured data) is validated based at least in part on expected characteristic data associated with the asserted user identity. Alternatively or additionally, in some embodiments, data associated with a background of the imaging data (e.g., background image data) is validated based at least in part on expected background image data associated with the asserted user identity. It will be appreciated that embodiments of the present disclosure may perform any number and/or combination of additional validations, for example and without limitation validation of facial features of the user based at least in part on a visible portion of the user represented in the remaining portion of captured data, validation of other physical characteristics of the user based at least in part on a visible portion of the user represented in the remaining portion of captured data, validation of background image data represented in the remaining portion of captured data, validation of physical characteristic movement data associated with the user and/or one or more physical characteristics thereof, and/or the like.

By performing one or more additional validation sub-process(es) at operation 808, for example, embodiments of the present disclosure improve the likelihood that a user is validated only in a circumstance where their asserted user identity matches their actual identity. In this regard, the overall security of the system is improved by reducing the likelihood that a user is validated in a circumstance where their asserted user identity does not match their actual identity. Furthermore, it will be appreciated in light of this disclosure that embodiments utilizing several additional validation sub-process(es) further improve the security of such embodiments, and that such improved security may result in decreased throughput and/or increased computing power usage to perform the additional validation(s). Additionally or alternatively, in some embodiments, it will be appreciated that embodiments further improve the ability for such validation(s) to be performed even in circumstances where conventional validation mechanism(s), such as traditional facial recognition, would normally fail by utilizing particular validation sub-process(es) that rely on visible portion(s) of a user and/or characteristics that remain measurable when a user is encumbered or obfuscated by particular equipment, for example PPE. In some example contexts, such advantages are particularly advantageous, such as in environments where the user is prevented from removing their equipment safely or otherwise incapable of doing so. Additionally or alternatively still, by utilizing an asserted user identity determined from a printed code, embodiments of the present disclosure enable identification of an asserted user identity for the user with reduced and/or no explicit user input by the user. Such reduced user input produces a more efficient validation process, but in various contexts also further reduces the user's risk from engaging with the environment by reducing (or entirely eliminating) engagements to provide such user input(s).

In some embodiments, the additional validation sub-process(es) include validation of one or more additional biometric feature(s). For example, in some embodiments, a user identifier is associated with additional expected biometric data. In this regard, such additional expected biometric data for an asserted user identity, or at least a portion thereof corresponding to a particular biometric characteristic of the user, is comparable with captured biometric data to determine whether such data matches. In one non-limiting example embodiment, fingerprint data is compared with expected fingerprint data to determine whether the fingerprint of the user corresponding to a particular asserted user identity matches the expected fingerprint for that user identifier.

In some embodiments, such additional biometric feature(s) are validated utilizing alternative and/or additional sensor(s). In some such embodiments, the additional sensor(s) include non-image sensors configured to capture a particular type of data. For example in some embodiments, such specialized sensors capture data specific to a biometric characteristic of the user that cannot be sufficiently determined from a conventional image. For example, in some embodiments, a fingerprint scanner is used to capture fingerprint data that represents a user's fingerprint, such that the fingerprint data may be compared to expected fingerprint data for a particular asserted user identity.

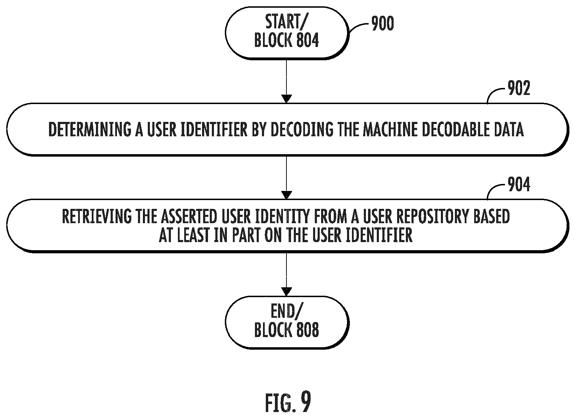

FIG. 9 illustrates a flowchart including example operations of an example process for identifying an asserted user identity based at least in part on machine decodable data in accordance with at least some example embodiments of the present disclosure. Specifically, FIG. 9 depicts operations of an example process 900. In some embodiments, the process 900 is embodied by computer program code stored on a non-transitory computer-readable storage medium of a computer program product configured for execution to perform the process as depicted and described. Alternatively or additionally, in some embodiments, the process 900 is performed by one or more specially configured computing devices, such as the data-driven identity validation apparatus 200 alone or in communication with one or more other component(s), device(s), system(s), and/or the like. In this regard, in some such embodiments, the data-driven identity validation apparatus 200 is specially configured by computer-coded instructions (e.g., computer program instructions) stored thereon, for example in the memory 204 and/or another component depicted and/or described herein and/or otherwise accessible to the data-driven identity validation apparatus 200, for performing the operations as depicted and described. In some embodiments, the data-driven identity validation apparatus 200 is in communication with one or more external apparatus(es), system(s), device(s), and/or the like, to perform one or more of the operations as depicted and described. For example, the data-driven identity validation apparatus 200 in some embodiments is in communication with an end-user computing device and/or a capture system, such as the capture system 102. For purposes of simplifying the description, the process 900 is described as performed by and from the perspective of the allocation modeling apparatus 200.

The process 900 beings at operation 902. In some embodiments, the process 900 begins after one or more operations depicted and/or described with respect to any one of the other processes described herein. For example, in some embodiments as depicted, the process 900 begins after execution of operation 804. In this regard, some or all of the process 900 may replace or supplement one or more blocks depicted and/or described with respect to any of the processes described herein, for example the operation 806. Upon completion of the process 900, the flow of operations may terminate. Additionally or alternatively, as depicted, upon completion of the process 900 in some embodiments, flow may return to one or more operation(s) of another process, such as the operation 808. It will be appreciated that, in some embodiments, the process 900 embodies a sub-process of one or more other process(es) depicted and/or described herein, for example the process 800.

At operation 902, the data-driven identity validation apparatus 200 includes means such as the authentication and validation circuitry 214, the data parsing circuitry 212, the capturing circuitry 210, the communications circuitry 208, the input/output circuitry 206, the processor 202, and/or the like, or a combination thereof, to determine a user identifier by decoding the machine decodable data. In some such embodiments, the machine decodable data embodies only the user identifier requiring minimal data to represent. In this regard, it will be appreciated that the user identifier is representable using a simplified printed code that need not have significant visual complexity and/or size to represent the user identifier.

At operation 904, the data-driven identity validation apparatus 200 includes means such as the authentication and validation circuitry 214, the data parsing circuitry 212, the capturing circuitry 210, the communications circuitry 208, the input/output circuitry 206, the processor 202, and/or the like, or a combination thereof, to retrieve the asserted user identity from a user repository based at least in part on the user identifier decoded from the machine decodable data. In some such embodiments, the asserted user identity includes or is embodied by one or more data object(s) that include any number of data properties and/or corresponding data value(s) for user in validating the user identifier corresponds to the user. For example, in some embodiments, the asserted user identity is retrieved including one or more portion(s) of expected data stored associated with the user identifier. In this regard, the retrieved portion(s) of expected data in some embodiments are comparable to corresponding portion(s) of captured data to determine whether such portions of data match. In some such embodiments, a user is validated as corresponding to the asserted user identity in circumstances where captured data portion(s) associated with the user match some or all of the expected data corresponding to the asserted user identity.

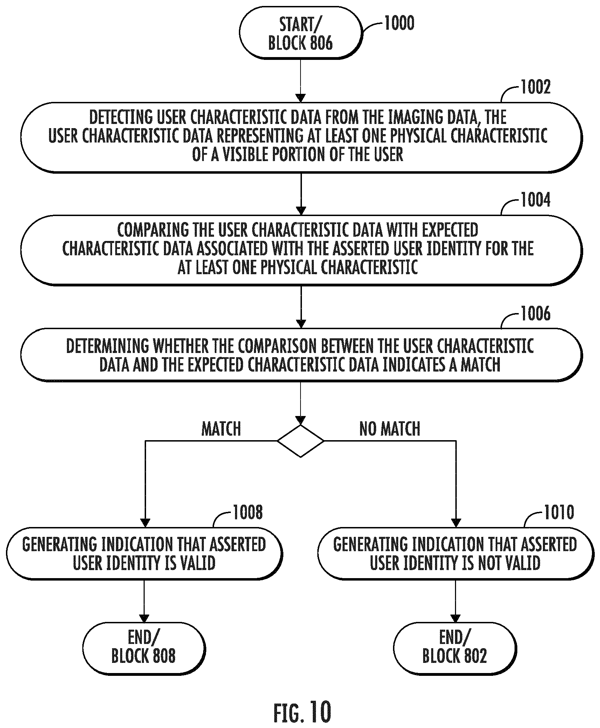

FIG. 10 illustrates a flowchart including example operations of an example process for validating an asserted user based at least in part on at least one physical characteristic in accordance with at least some example embodiments of the present disclosure. Specifically, FIG. 10 depicts operations of an example process 1000. In some embodiments, the process 1000 is embodied by computer program code stored on a non-transitory computer-readable storage medium of a computer program product configured for execution to perform the process as depicted and described. Alternatively or additionally, in some embodiments, the process 1000 is performed by one or more specially configured computing devices, such as the data-driven identity validation apparatus 200 alone or in communication with one or more other component(s), device(s), system(s), and/or the like. In this regard, in some such embodiments, the data-driven identity validation apparatus 200 is specially configured by computer-coded instructions (e.g., computer program instructions) stored thereon, for example in the memory 204 and/or another component depicted and/or described herein and/or otherwise accessible to the data-driven identity validation apparatus 200, for performing the operations as depicted and described. In some embodiments, the data-driven identity validation apparatus 200 is in communication with one or more external apparatus(es), system(s), device(s), and/or the like, to perform one or more of the operations as depicted and described. For example, the data-driven identity validation apparatus 200 in some embodiments is in communication with an end-user computing device and/or a capture system, such as the capture system 102. For purposes of simplifying the description, the process 1000 is described as performed by and from the perspective of the allocation modeling apparatus 200.

The process 1000 begins at operation 1002. In some embodiments, the process 1000 begins after one or more operations depicted and/or described with respect to any one of the other processes described herein. For example, in some embodiments as depicted, the process 1000 begins after execution of operation 806. In this regard, some or all of the process 1000 may replace or supplement one or more blocks depicted and/or described with respect to any of the processes described herein, for example the operation 808. Upon completion of the process 1000, the flow of operations may terminate. Additionally or alternatively, as depicted, upon completion of the process 1000 in some embodiments, flow may return to one or more operation(s) of another process, such as the operation 808. It will be appreciated that, in some embodiments, the process 1000 embodies a sub-process of one or more other process(es) depicted and/or described herein, for example the process 800.

At operation 1002, the data-driven identity validation apparatus 200 includes means such as the authentication and validation circuitry 214, the data parsing circuitry 212, the capturing circuitry 210, the communications circuitry 208, the input/output circuitry 206, the processor 202, and/or the like, or a combination thereof, to detect user characteristic data from the imaging data. The user characteristic represents at least one physical characteristic of a visible portion of the user. For example, in some embodiments, the data-driven identity validation apparatus 200 utilizes one or more custom or known feature detection algorithms that perform image processing to detect a representation of a physical characteristic in the imaging data. In some embodiments, such feature detection algorithm(s) include facial feature detection algorithm(s), object detection algorithm(s), specially trained machine learning model(s), specially trained artificial intelligence model(s), and/or the like. It will be appreciated that, in some embodiments, one or more feature detection algorithm(s) known in the art and/or portion(s) thereof is/are utilized to detect user characteristic data corresponding to one or more physical characteristic(s) of the user.

In one example context, the visible portion of the user embodies a visible portion of the user's face that is not obfuscated by a marked PPE mask. In some such embodiments, the data-driven identity validation apparatus 200 detects user characteristic data representing a user's eye(s), eyebrow(s), visible nose portion, forehead, ear(s), and/or the like, that are utilized for validation as described herein. In this regard, in some embodiments the feature detection algorithm is specially configured to detect user characteristic data corresponding to representation(s) of physical characteristic(s) that will be present based on a user's expected equipment, clothing, and/or the like at the time validation of the user identity will occur.

In some embodiments, the user characteristic data comprises physical characteristic movement data associated with one or more physical characteristics represented for a visible portion of the user. For example, in some embodiments, the physical characteristic movement data represents a speed, position time-series, and/or other trackable movement of one or more data point(s) defining a physical characteristic over a particular time. In some embodiments, the physical characteristic movement data comprises data value(s) representing an offset of a particular feature while the user is performing a particular instructed action utilizing an associated physical characteristic. In some example contexts, the physical characteristic movement data comprises one or more data value(s) representing movement of one or more facial feature(s) of a user, where the facial feature(s) are part of a visible portion of the user's face not obfuscated by a marked PPE mask work by the user. In some such contexts, the data-driven identity validation apparatus 200 and/or an associated capture system instructs the user to perform a particular action, such as an eyebrow raise, a nose wiggle, predefined eye movements, a head tilt, and/or the like. Corresponding physical characteristic movement data may be captured concurrently with the action being performed, where the physical characteristic movement data represents the position offset, speed, and/or other measurable data value(s) associated with the physical characteristic while the action being performed and over a particular time interval. In some embodiments, the physical characteristic movement data comprises a time series of a particular data value.

At operation 1004, the data-driven identity validation apparatus 200 includes means such as the authentication and validation circuitry 214, the data parsing circuitry 212, the capturing circuitry 210, the communications circuitry 208, the input/output circuitry 206, the processor 202, and/or the like, or a combination thereof, to compare the user characteristic data with expected characteristic data associated with the asserted user identity. In some embodiments, the expected characteristic data corresponds to a particular physical characteristic, such that different expected characteristic data is stored for each physical feature to be utilized during validation. In some embodiments, the data-driven identity validation apparatus 200 retrieves the user characteristic data from one or more data repositories based at least in part on the asserted user identity. For example, in some embodiments, the asserted user identity includes or is associated with a particular user identifier utilized to retrieve expected characteristic data, for example stored during registration of the user associated with the particular user identifier.

In some embodiments, the expected characteristic data comprises expected characteristic movement data corresponding to a particular physical feature. In this regard, in some such embodiments the expected characteristic movement data embodies a measured change in position over a time interval while a particular user performs a particular action during user registration. For example, in some embodiments, during user registration a user is instructed to perform a particular action, such as an eyebrow raise, a nose wiggle, predefined eye movements, a head tilt, and/or the like. While the action is being performed, data value(s) corresponding to one or more aspect(s) of the movement of a physical characteristic of the user (e.g., speed, position change, and/or the like of eyes, nose, head, or another physical characteristic) is captured by one or more sensor(s). The resulting captured data during such action(s) in some embodiments is subsequently stored as the expected characteristic movement data that is associated with the user identifier subsequently generated for the user during and/or upon completion of registration.

In some embodiments, the data-driven identity validation apparatus 200 compares the user characteristic data of the captured data and the expected characteristic data utilizing one or more image comparison algorithm(s). Alternatively or additionally, in some embodiments, the data-driven identity validation apparatus 200 compares the user characteristic data of the captured data and the expected characteristic data utilizing one or more custom comparison algorithm(s). In some embodiments, for example, a representation of a physical characteristic is defined by one or more data point(s) and/or data value(s) that define the bounds of the physical characteristic, and such data points and/or data value(s) are compared to determine whether the bounds of the physical characteristic in the user characteristic data matches or sufficiently matches (e.g., within a particular acceptable error threshold) the bounds of the physical characteristic in the corresponding expected characteristic data. Alternatively or additionally, in some embodiments, the custom comparison algorithm(s) compare one or more other aspects such as color representation(s), size, and/or other unique features or physical landmarks.

At operation 1006, the data-driven identity validation apparatus 200 includes means such as the authentication and validation circuitry 214, the data parsing circuitry 212, the capturing circuitry 210, the communications circuitry 208, the input/output circuitry 206, the processor 202, and/or the like, or a combination thereof, to determine whether the comparison between the user characteristic data and the expected characteristic data indicates a match. In some embodiments, for example, the data-driven identity validation apparatus 200 generates results data that indicates either that the user characteristic data was determined to match the expected characteristic data, or that the user characteristic data was not determined to match the expected characteristic data. In some such embodiments, the data-driven identity validation apparatus 200 processes the results data to determine whether comparison resulted in a match.

In some embodiments, in a circumstance where the data-driven identity validation apparatus 200 determines the user characteristic data did match the expected characteristic data, flow proceeds to operation 1008. At operation 1008, the data-driven identity validation apparatus 200 includes means such as the authentication and validation circuitry 214, the data parsing circuitry 212, the capturing circuitry 210, the communications circuitry 208, the input/output circuitry 206, the processor 202, and/or the like, or a combination thereof, to generate an indication that the asserted user identity is valid. In some embodiments, the indication comprises setting a validation status associated with the asserted user identity to "valid." Alternatively or additionally, in some embodiments, the data-driven identity validation apparatus 200 generates an indication by initiating one or more other process(es). Alternatively or additionally still, in some embodiments the data-driven identity validation apparatus 200 generates one or more renderable data objects indicating that the asserted user identity was successfully validated, for example to be rendered via the data-driven identity validation apparatus 200 and/or an associated end-user device.

In some other embodiments, validation of multiple additional characteristic(s) is required to successfully validate the asserted user identity. In some such embodiments, the data-driven identity validation apparatus 200 indicates that the particular user characteristic data was validated as matching corresponding expected characteristic data for the asserted user identity. One or more additional validation(s) may be performed for other aspect(s) of the user, for example based on user voice data, physical characteristic movement data, and/or the like as described herein. In some such embodiments, the generation of an indication that the asserted user identity is validated occurs only upon completion of all, a majority of, or at least some of a plurality of successful validation(s) of different aspect(s) of the user.

In some embodiments, in a circumstance where the data-driven identity validation apparatus 200 determines the user characteristic data did not match the expected characteristic data, flow proceeds to operation 1010. At operation 1010, the data-driven identity validation apparatus 200 includes means such as the authentication and validation circuitry 214, the data parsing circuitry 212, the capturing circuitry 210, the communications circuitry 208, the input/output circuitry 206, the processor 202, and/or the like, or a combination thereof, to generate an indication that the asserted user identity is not valid. In some embodiments, the indication comprises setting a validation status associated with the asserted user identity to "not valid." Alternatively or additionally, in some embodiments, the data-driven identity validation apparatus 200 terminates and/or otherwise does not initiate one or more other process(es) requested by the user to be validated (e.g., to access a particular computing device). Alternatively or additionally still, in some embodiments the data-driven identity validation apparatus 200 generates one or more renderable data objects indicating that the asserted user identity was not validated, for example to be rendered by the data-driven identity validation apparatus 200 and/or an associated end-user device.

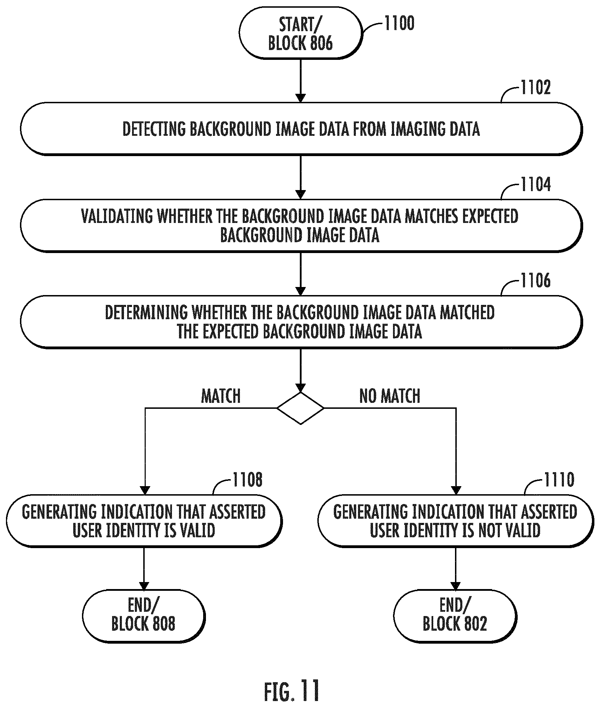

FIG. 11 illustrates a flowchart including example operations of an example process for validating an asserted user based at least in part on background image data in accordance with at least some example embodiments of the present disclosure. Specifically, FIG. 11 depicts operations of an example process 1100. In some embodiments, the process 1100 is embodied by computer program code stored on a non-transitory computer-readable storage medium of a computer program product configured for execution to perform the process as depicted and described. Alternatively or additionally, in some embodiments, the process 1100 is performed by one or more specially configured computing devices, such as the data-driven identity validation apparatus 200 alone or in communication with one or more other component(s), device(s), system(s), and/or the like. In this regard, in some such embodiments, the data-driven identity validation apparatus 200 is specially configured by computer-coded instructions (e.g., computer program instructions) stored thereon, for example in the memory 204 and/or another component depicted and/or described herein and/or otherwise accessible to the data-driven identity validation apparatus 200, for performing the operations as depicted and described. In some embodiments, the data-driven identity validation apparatus 200 is in communication with one or more external apparatus(es), system(s), device(s), and/or the like, to perform one or more of the operations as depicted and described. For example, the data-driven identity validation apparatus 200 in some embodiments is in communication with an end-user computing device and/or a capture system, such as the capture system 102. For purposes of simplifying the description, the process 1100 is described as performed by and from the perspective of the allocation modeling apparatus 200.

The process 1100 begins at operation 1102. In some embodiments, the process 1100 begins after one or more operations depicted and/or described with respect to any one of the other processes described herein. For example, in some embodiments as depicted, the process 1100 begins after execution of operation 806. In this regard, some or all of the process 1100 may replace or supplement one or more blocks depicted and/or described with respect to any of the processes described herein, for example the operation 808. Upon completion of the process 1100, the flow of operations may terminate. Additionally or alternatively, as depicted, upon completion of the process 1100 in some embodiments, flow may return to one or more operation(s) of another process, such as the operation 808. It will be appreciated that, in some embodiments, the process 1100 embodies a sub-process of one or more other process(es) depicted and/or described herein, for example the process 800.

At operation 1102, the data-driven identity validation apparatus 200 includes means such as the authentication and validation circuitry 214, the data parsing circuitry 212, the capturing circuitry 210, the communications circuitry 208, the input/output circuitry 206, the processor 202, and/or the like, or a combination thereof, to background image data from the imaging data. In some embodiments, the background image data represents at least one portion of the imaging data that represents an environment, object(s), and/or the like positioned within a captured image behind, beside, and/or otherwise around the user within the captured imaging data. For example, in some embodiments, the data-driven identity validation apparatus 200 utilizes one or more object detection algorithm(s) to identify and extract the data representing the user in the imaging data, with the background image data corresponding to the remaining portion of the imaging data with the representation of the user removed. In some embodiments, data-driven identity validation apparatus 200 utilizes a background detection algorithm known in the art to identify the background image data from the captured imaging data.

At operation 1104, the data-driven identity validation apparatus 200 includes means such as the authentication and validation circuitry 214, the data parsing circuitry 212, the capturing circuitry 210, the communications circuitry 208, the input/output circuitry 206, the processor 202, and/or the like, or a combination thereof, to validate whether the background image data matches expected background image data. In some embodiments, the expected background image data is associated with the asserted user identity. For example, in some embodiments, the data-driven identity validation apparatus 200 retrieves expected background image data from one or more data repositories based at least in part on the asserted user identity (e.g., where the asserted user identity and/or a particular user identifier associated therewith embodies a key for querying the one or more data repositories). Alternatively or additionally, in some embodiments, the expected background image data is determinable based at least in part on one or more other data value(s), for example a time, a date, a number of previous validation(s), and/or the like.

In some embodiments, the data-driven identity validation apparatus 200 validates whether the background image data matches the expected background image data by comparing the background image data with the expected background image data. As described herein, the data-driven identity validation apparatus 200 in some embodiments compares the background image data and the expected background image data utilizing one or more custom comparison algorithm(s), image processing algorithm(s), and/or the like. For example, in some embodiments, the data-driven identity validation apparatus 200 compares the background image data and the expected background image data to determine whether such data sufficiently matches. In some embodiments, a match in the background image data with the expected background image data indicates that the user is at a particular location while performing validation. It will be appreciated that such comparison algorithm(s) may compare any of a myriad of determinable data value(s) for one or more data properties, for example color value(s), object(s) detected in the background image data, and/or the like.

At operation 1106, the data-driven identity validation apparatus 200 includes means such as the authentication and validation circuitry 214, the data parsing circuitry 212, the capturing circuitry 210, the communications circuitry 208, the input/output circuitry 206, the processor 202, and/or the like, or a combination thereof, to determine whether the background image data matched the expected background image data. In some embodiments, performs such a determination based at least in part on results data from a comparison performed at operation 1104.

In some embodiments, in a circumstance where the data-driven identity validation apparatus 200 determines the background image data did match the expected voice data, flow proceeds to operation 1108. At operation 1108, the data-driven identity validation apparatus 200 includes means such as the authentication and validation circuitry 214, the data parsing circuitry 212, the capturing circuitry 210, the communications circuitry 208, the input/output circuitry 206, the processor 202, and/or the like, or a combination thereof, to generate an indication that the asserted user identity is valid. In some embodiments, the indication comprises setting a validation status associated with the asserted user identity to "valid." Alternatively or additionally, in some embodiments, the data-driven identity validation apparatus 200 generates an indication by initiating one or more other process(es). Alternatively or additionally still, in some embodiments the data-driven identity validation apparatus 200 generates one or more renderable data objects indicating that the asserted user identity was successfully validated, for example to be rendered via the data-driven identity validation apparatus 200 and/or an associated end-user device.

In some other embodiments, validation of multiple additional characteristic(s) is required to successfully validate the asserted user identity. In some such embodiments, the data-driven identity validation apparatus 200 indicates that the background image data was validated as matching corresponding expected background image data for the asserted user identity. One or more additional validation(s) may be performed for other aspect(s) of the user, for example based on user voice data, physical characteristic movement data, user characteristic data, and/or the like as described herein. In some such embodiments, the generation of an indication that the asserted user identity is validated occurs only upon completion of all, a majority of, or at least some of a plurality of successful validation(s) of different aspect(s) of the user. In some such embodiments, flow may continue to operation 808 for additional validation(s), if necessary.

In some embodiments, in a circumstance where the data-driven identity validation apparatus 200 determines the background image data did not match the expected background image data, flow proceeds to operation 1110. At operation 1110, the data-driven identity validation apparatus 200 includes means such as the authentication and validation circuitry 214, the data parsing circuitry 212, the capturing circuitry 210, the communications circuitry 208, the input/output circuitry 206, the processor 202, and/or the like, or a combination thereof, to generate an indication that the asserted user identity is not valid. In some embodiments, the indication comprises setting a validation status associated with the asserted user identity to "not valid." Alternatively or additionally, in some embodiments, the data-driven identity validation apparatus 200 terminates and/or otherwise does not initiate one or more other process(es) requested by the user to be validated (e.g., to access a particular computing device). Alternatively or additionally still, in some embodiments the data-driven identity validation apparatus 200 generates one or more renderable data objects indicating that the asserted user identity was not validated, for example to be rendered by the data-driven identity validation apparatus 200 and/or an associated end-user device.

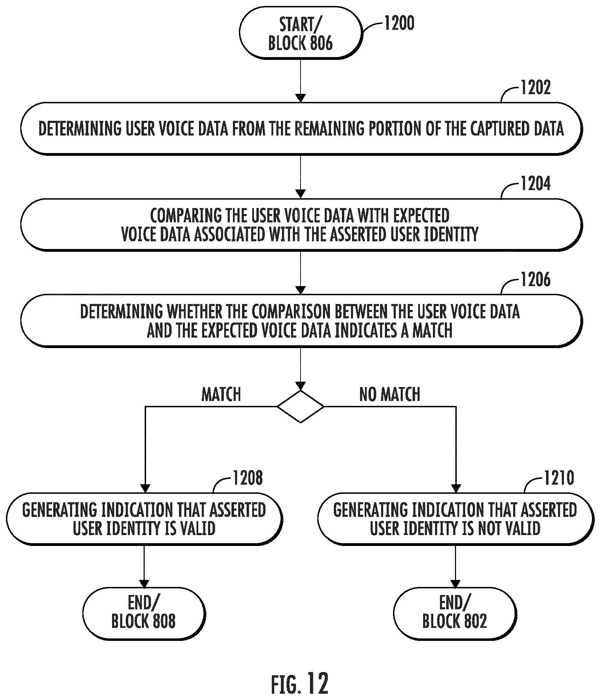

FIG. 12 illustrates a flowchart including example operations of an example process for validating an asserted user based at least in part on user voice data in accordance with at least some example embodiments of the present disclosure. Specifically, FIG. 12 depicts operations of an example process 1200. In some embodiments, the process 1200 is embodied by computer program code stored on a non-transitory computer-readable storage medium of a computer program product configured for execution to perform the process as depicted and described. Alternatively or additionally, in some embodiments, the process 1200 is performed by one or more specially configured computing devices, such as the data-driven identity validation apparatus 200 alone or in communication with one or more other component(s), device(s), system(s), and/or the like. In this regard, in some such embodiments, the data-driven identity validation apparatus 200 is specially configured by computer-coded instructions (e.g., computer program instructions) stored thereon, for example in the memory 204 and/or another component depicted and/or described herein and/or otherwise accessible to the data-driven identity validation apparatus 200, for performing the operations as depicted and described. In some embodiments, the data-driven identity validation apparatus 200 is in communication with one or more external apparatus(es), system(s), device(s), and/or the like, to perform one or more of the operations as depicted and described. For example, the data-driven identity validation apparatus 200 in some embodiments is in communication with an end-user computing device and/or a capture system, such as the capture system 102. For purposes of simplifying the description, the process 1200 is described as performed by and from the perspective of the allocation modeling apparatus 200.

The process 1200 begins at operation 1202. In some embodiments, the process 1200 begins after one or more operations depicted and/or described with respect to any one of the other processes described herein. For example, in some embodiments as depicted, the process 1200 begins after execution of operation 806. In this regard, some or all of the process 1200 may replace or supplement one or more blocks depicted and/or described with respect to any of the processes described herein, for example the operation 808. Upon completion of the process 1200, the flow of operations may terminate. Additionally or alternatively, as depicted, upon completion of the process 1200 in some embodiments, flow may return to one or more operation(s) of another process, such as the operation 808. It will be appreciated that, in some embodiments, the process 1200 embodies a sub-process of one or more other process(es) depicted and/or described herein, for example the process 800.

At operation 1202, the data-driven identity validation apparatus 200 includes means such as the authentication and validation circuitry 214, the data parsing circuitry 212, the capturing circuitry 210, the communications circuitry 208, the input/output circuitry 206, the processor 202, and/or the like, or a combination thereof, to determine user voice data from the remaining portion of the captured data. In some embodiments, the user voice data comprises audio data captured that represents the user's voice. In some embodiments, the user speaks a predetermined phrase that is captured by the data-driven identity validation apparatus 200 and/or an associated capture system. In some such embodiments, the data-driven identity validation apparatus 200 generates one or more user interface(s) comprising a prompt for the user to speak, for example where the prompt matches a phrase uttered by the user during registration of corresponding expected voice data for the particular asserted user identity. In some embodiments, the captured data includes one or more separate data portion(s) embodying audio data, the audio data representing at least the user voice data captured associated with the user.

At operation 1204, the data-driven identity validation apparatus 200 includes means such as the authentication and validation circuitry 214, the data parsing circuitry 212, the capturing circuitry 210, the communications circuitry 208, the input/output circuitry 206, the processor 202, and/or the like, or a combination thereof, to compare the user voice data with expected characteristic data associated with the asserted user identity. In some embodiments, the expected voice data corresponds to a particular non-visible physical characteristic of the user (e.g., a user's voice pitch, intonation, speech pattern(s), and/or the like). In this regard, in some embodiments the expected voice data includes any of a myriad of data value(s) corresponding to one or more measurable audio data properties associated with a user's recorded speech and/or sound(s). In some embodiments, the data-driven identity validation apparatus 200 retrieves the expected voice data from one or more data repositories based at least in part on the asserted user identity. For example, in some embodiments, the asserted user identity includes or is associated with a particular user identifier utilized to retrieve the expected voice data, for example recorded and/or stored during registration of the user associated with the particular user identifier.

In some embodiments, the data-driven identity validation apparatus 200 compares the user voice data of the captured data with the expected voice data utilizing one or more audio comparison algorithm(s). Alternatively or additionally, in some embodiments, the data-driven identity validation apparatus 200 compares the user voice data of the captured data and the expected voice data utilizing one or more custom comparison algorithm(s). In some embodiments, for example, one or more audio properties (e.g., pitch, volume, and/or the like) is defined by one or more data value(s) represented in the user voice data and the expected voice data, such that the data value(s) corresponding to particular word(s) and/or other portion(s) of a spoken phrase, for example, are directly comparable to determine whether such data values match and/or sufficiently match (e.g., within an acceptable error threshold).

At operation 1206, the data-driven identity validation apparatus 200 includes means such as the authentication and validation circuitry 214, the data parsing circuitry 212, the capturing circuitry 210, the communications circuitry 208, the input/output circuitry 206, the processor 202, and/or the like, or a combination thereof, to determine whether the comparison between the user voice data and the expected voice data indicates a match. In some embodiments, for example, the data-driven identity validation apparatus 200 generates results data that indicates either that the user voice data was determined to match the expected voice data, or that the user voice data was not determined to match the expected voice data. In some such embodiments, the data-driven identity validation apparatus 200 processes the results data to determine whether the comparison resulted in a match.

In some embodiments, in a circumstance where the data-driven identity validation apparatus 200 determines that the user voice data did match the expected voice data, flow proceeds to operation 1208. At operation 1208, the data-driven identity validation apparatus 200 includes means such as the authentication and validation circuitry 214, the data parsing circuitry 212, the capturing circuitry 210, the communications circuitry 208, the input/output circuitry 206, the processor 202, and/or the like, or a combination thereof, to generate an indication that the asserted user identity is valid. In some embodiments, the indication comprises setting a validation status associated with the asserted user identity to "valid." Alternatively or additionally, in some embodiments, the data-driven identity validation apparatus 200 generates an indication by initiating one or more other process(es). Alternatively or additionally still, in some embodiments the data-driven identity validation apparatus 200 generates one or more renderable data objects indicating that the asserted user identity was successfully validated, for example to be rendered via the data-driven identity validation apparatus 200 and/or an associated end-user device.

In some other embodiments, validation of multiple additional characteristic(s) is required to successfully validate the asserted user identity. In some such embodiments, the data-driven identity validation apparatus 200 indicates that the user voice data was validated as matching corresponding expected voice data for the asserted user identity. One or more additional validation(s) may be performed for other aspect(s) of the user, for example based on background image data, physical characteristic movement data, user characteristic data, and/or the like as described herein. In some such embodiments, the generation of an indication that the asserted user identity is validated occurs only upon completion of all, a majority of, or at least some of a plurality of successful validation(s) of different aspect(s) of the user. In some such embodiments, flow may continue to operation 808 for additional validation(s), if necessary.

In some embodiments, in a circumstance where the data-driven identity validation apparatus 200 determines the user voice data did not match the expected voice data, flow proceeds to operation 1210. At operation 1210, the data-driven identity validation apparatus 200 includes means such as the authentication and validation circuitry 214, the data parsing circuitry 212, the capturing circuitry 210, the communications circuitry 208, the input/output circuitry 206, the processor 202, and/or the like, or a combination thereof, to generate an indication that the asserted user identity is not valid. In some embodiments, the indication comprises setting a validation status associated with the asserted user identity to "not valid." Alternatively or additionally, in some embodiments, the data-driven identity validation apparatus 200 terminates and/or otherwise does not initiate one or more other process(es) requested by the user to be validated (e.g., to access a particular computing device). Alternatively or additionally still, in some embodiments the data-driven identity validation apparatus 200 generates one or more renderable data objects indicating that the asserted user identity was not validated, for example to be rendered by the data-driven identity validation apparatus 200 and/or an associated end-user device.

### CONCLUSION

Although an example processing system has been described above, implementations of the subject matter and the functional operations described herein can be implemented in other types of digital electronic circuitry, or in computer software, firmware, or hardware, including the structures disclosed in this specification and their structural equivalents, or in combinations of one or more of them.

Embodiments of the subject matter and the operations described herein can be implemented in digital electronic circuitry, or in computer software, firmware, or hardware, including the structures disclosed in this specification and their structural equivalents, or in combinations of one or more of them. Embodiments of the subject matter described herein can be implemented as one or more computer programs, i.e., one or more modules of computer program instructions, encoded on computer storage medium for execution by, or to control the operation of, information/data processing apparatus. Alternatively, or in addition, the program instructions can be encoded on an artificially-generated propagated signal, e.g., a machine-generated electrical, optical, or electromagnetic signal, which is generated to encode information/data for transmission to suitable receiver apparatus for execution by an information/data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described herein can be implemented as operations performed by an information/data processing apparatus on information/data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a repository management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or information/data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described herein can be performed by one or more programmable processors executing one or more computer programs to perform actions by operating on input information/data and generating output. Processors suitable for the execution of a computer program include, by way of example, both general and special purpose microprocessors, and any one or more processors of any kind of digital computer. Generally, a processor will receive instructions and information/data from a read-only memory or a random access memory or both. The essential elements of a computer are a processor for performing actions in accordance with instructions and one or more memory devices for storing instructions and data. Generally, a computer will also include, or be operatively coupled to receive information/data from or transfer information/data to, or both, one or more mass storage devices for storing data, e.g., magnetic, magneto-optical disks, or optical disks. However, a computer need not have such devices. Devices suitable for storing computer program instructions and information/data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described herein can be implemented on a computer having a display device, e.g., a CRT (cathode ray tube) or LCD (liquid crystal display) monitor, for displaying information/data to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described herein can be implemented in a computing system that includes a back-end component, e.g., as an information/data server, or that includes a middleware component, e.g., an application server, or that includes a front-end component, e.g., a client computer having a graphical user interface or a web browser through which a user can interact with an implementation of the subject matter described herein, or any combination of one or more such back-end, middleware, or front-end components. The components of the system can be interconnected by any form or medium of digital information/data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits information/data (e.g., an HTML page) to a client device (e.g., for purposes of displaying information/data to and receiving user input from a user interacting with the client device). Information/data generated at the client device (e.g., a result of the user interaction) can be received from the client device at the server.

While this specification contains many specific implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In addition, the processes depicted in the accompanying figures do not necessarily require the particular order shown, or sequential order, to achieve desirable results.

## Claims

1. A method (800) comprising:
receiving (802) captured data associated with a user, the captured data comprising at least imaging data associated with the user;
detecting (804), from the imaging data, machine decodable data associated with the user, wherein the machine decodable data is visible on at least one item worn by the user which obfuscates a facial feature of the user;
determining (806) an asserted user identity associated with the user by decoding the machine decodable data; and
validating (808) the asserted user identity associated with the user utilizing at least a remaining portion the captured data by detecting user characteristic data representing at least one physical characteristic of the user in the imaging data to compare with an expected characteristic data,
wherein the user characteristic data comprises facial recognition data associated with a visible portion of a face for the user, wherein the imaging data comprises data representing at least an obfuscated portion of the face of the user.

2. The method (800) according to claim 1, wherein the at least one item worn by the user comprises at least one piece of personal protective equipment.

3. The method (800) according to claim 1 or 2, wherein the machine decodable data comprises a machine-readable symbology representation, an image, an encoded image, or detectable text data.

4. The method (800) according to any one of claims 1-3, wherein validating (808) the asserted user identity associated with the user utilizing at least the remaining portion of the captured data further comprises:
comparing (1004) the user characteristic data with expected characteristic data associated with the asserted user identity for the at least one physical characteristic; and
determining (1006) whether the comparison between the user characteristic data and the expected characteristic data indicates a match.

5. The method (800) according to claim 4, wherein the user characteristic data comprises physical characteristic movement data associated with a nose of the user, at least one eye of the user, a head of the user, or at least one eyebrow of the user.

6. The method (800) according any one of claims 1-5, wherein determining (806) the asserted user identity associated with the user by decoding the machine decodable data comprises:
determining (902) a user identifier by decoding the machine decodable data; and
retrieving (904) the asserted user identity from a user repository based at least in part on the user identifier.

7. The method (800) according to any one of claims 1-6, wherein validating (808) the asserted user identity associated with the user utilizing at least the remaining portion of the captured data comprises:
detecting (1102) background image data in the imaging data; and
validating (1104) the background image data matches expected background image data.

8. The method according to any one of claims 1-7, wherein validating (808) the asserted user identity associated with the user utilizing at least the remaining portion of the captured data comprises:
determining (1202) user voice data from the captured data; and
validating (1206) the user voice data matches expected voice data associated with the asserted user identity.

9. The method (800) according to any one of claims 1-8, wherein receiving (802) the captured data associated with the user comprises capturing the captured data via at least one image sensor.

10. The method (800) according to any one of claims 1-9, wherein the machine decodable data comprises a QR code.

11. An apparatus (200) comprising at least one processor (202) and at least one memory (204), the at least one memory (204) having computer-coded instructions stored thereon that, in execution via the at least one processor (202), configures the apparatus (200) to perform any one of the methods according to claims 1-10.

12. A computer program product comprising at least one non-transitory computer-readable storage medium having computer program code stored thereon that, in execution via at least one processor (202), performs any one of the methods according to claims 1-10.

13. One or more computer programs comprising instructions which, when executed via at least one processor (202), cause the at least one processor (202) to perform any one of the methods according to claims 1-10.

## Patentansprüche

1. Verfahren (800), umfassend:
Empfangen (802) von erfassten Daten, die einem Benutzer zugehörig sind, wobei die erfassten Daten mindestens Bildgebungsdaten, die dem Benutzer zugehörig sind, umfassen;
Detektieren (804), aus den Bildgebungsdaten, von maschinendekodierbaren Daten, die dem Benutzer zugehörig sind, wobei die maschinendekodierbaren Daten auf mindestens einem von dem Benutzer getragenen Element sichtbar sind, das ein Gesichtsmerkmal des Benutzers verschleiert;
Bestimmen (806) einer behaupteten Benutzeridentität, die dem Benutzer zugehörig sind, durch Dekodieren der maschinendekodierbaren Daten; und
Validieren (808) der behaupteten Benutzeridentität, die dem Benutzer zugehörig ist, unter Nutzung von mindestens einem restlichen Teil der erfassten Daten durch Detektieren von Benutzereigenschaftsdaten, die mindestens eine physische Eigenschaft des Benutzers in den Bildgebungsdaten darstellen, um sie mit erwarteten Eigenschaftsdaten zu vergleichen,
wobei die Benutzereigenschaftsdaten Gesichtserkennungsdaten umfassen, die einem sichtbaren Teil eines Gesichts für den Benutzer zugehörig sind, wobei die Bildgebungsdaten Daten umfassen, die mindestens einen verschleierten Teil des Gesichts des Benutzers umfassen.

2. Verfahren (800) nach Anspruch 1, wobei das mindestens eine von dem Benutzer getragene Element mindestens ein Bestandteil einer persönlichen Schutzausrüstung umfasst.

3. Verfahren (800) nach Anspruch 1 oder 2, wobei die maschinendekodierbaren Daten eine maschinenlesbare Symbologiedarstellung, ein Bild, ein kodiertes Bild oder detektierbare Textdaten umfassen.

4. Verfahren (800) nach einem der Ansprüche 1 bis 3, wobei das Validieren (808) der behaupteten Benutzeridentität, die dem Benutzer zugehörig ist, unter Nutzung von mindestens dem restlichen Teil der erfassten Daten ferner Folgendes umfasst:
Vergleichen (1004) der Benutzereigenschaftsdaten mit erwarteten Eigenschaftsdaten, die der behaupteten Benutzeridentität zugehörig sind, für die mindestens eine physische Eigenschaft; und
Bestimmen (1006), ob der Vergleich zwischen den Benutzereigenschaftsdaten und den erwarteten Eigenschaftsdaten eine Übereinstimmung anzeigt.

5. Verfahren (800) nach Anspruch 4, wobei die Benutzereigenschaftsdaten physische Eigenschaftsbewegungsdaten umfassen, die einer Nase des Benutzers, mindestens einem Auge des Benutzers, einem Kopf des Benutzers oder mindestens einer Augenbraue des Benutzers zugehörig sind.

6. Verfahren (800) nach einem der Ansprüche 1 bis 5, wobei das Bestimmen (806) der behaupteten Benutzeridentität, die dem Benutzer zugehörig ist, durch Dekodieren der maschinendekodierbaren Daten Folgendes umfasst:
Bestimmen (902) einer Benutzerkennung durch Dekodieren der maschinendekodierbaren Daten; und
Abrufen (904) der behaupteten Benutzeridentität aus einem Benutzerarchiv, basierend mindestens teilweise auf der Benutzerkennung.

7. Verfahren (800) nach einem der Ansprüche 1 bis 6, wobei das Validieren (808) der behaupteten Benutzeridentität, die dem Benutzer zugehörig ist, unter Nutzung von mindestens dem restlichen Teil der erfassten Daten Folgendes umfasst:
Detektieren (1102) von Hintergrund-Bildgebungsdaten in den Bildgebungsdaten; und
Validieren (1104), dass die Hintergrund-Bildgebungsdaten mit den erwarteten Hintergrund-Bildgebungsdaten übereinstimmen.

8. Verfahren nach einem der Ansprüche 1 bis 7, wobei das Validieren (808) der behaupteten Benutzeridentität, die dem Benutzer zugehörig ist, unter Nutzung von mindestens dem restlichen Teil der erfassten Daten Folgendes umfasst:
Bestimmen (1202) von Benutzersprachdaten aus den erfassten Daten; und
Validieren (1206), dass die Benutzersprachdaten mit den erwarteten Sprachdaten, die der behaupteten Benutzeridentität zugehörig sind, übereinstimmen.

9. Verfahren (800) nach einem der Ansprüche 1 bis 8, wobei das Empfangen (802) der erfassten Daten, die dem Benutzer zugehörig sind, das Erfassen der erfassten Daten über mindestens einen Bildsensor umfasst.

10. Verfahren (800) nach einem der Ansprüche 1 bis 9, wobei die maschinendekodierbaren Daten einen QR-Code umfassen.

11. Einrichtung (200), umfassend mindestens einen Prozessor (202) und mindestens einen Speicher (204), wobei der mindestens eine Speicher (204) darauf gespeicherte computerkodierte Anweisungen aufweist, die bei Ausführung über den mindestens einen Prozessor (202), die Einrichtung (200) dazu konfigurieren, eines der Verfahren nach den Ansprüchen 1 bis 10 durchzuführen.

12. Computerprogrammprodukt, umfassend mindestens ein nicht transitorisches computerlesbares Speichermedium, das darauf gespeicherten Computerprogrammcode aufweist, der bei Ausführung über mindestens einen Prozessor (202) eines der Verfahren nach den Ansprüche 1 bis 10 durchführt.

13. Eines oder mehrere Computerprogramme, umfassend Anweisungen, die bei Ausführung über mindestens einen Prozessor (202) den mindestens einen Prozessor (202) veranlassen, eines der Verfahren nach den Ansprüche 1 bis 10 durchzuführen.

## Revendications

1. Procédé (800) comprenant :
la réception (802) de données capturées associées à un utilisateur, les données capturées comprenant au moins des données d'imagerie associées à l'utilisateur ;
la détection (804), à partir des données d'imagerie, de données décodables par machine associées à l'utilisateur, dans lequel les données décodables par machine sont visibles sur au moins un article porté par l'utilisateur qui dissimule une caractéristique faciale de l'utilisateur ;
la détermination (806) d'une identité d'utilisateur affirmée associée à l'utilisateur par décodage des données décodables par machine ; et
la validation (808) de l'identité d'utilisateur affirmée associée à l'utilisateur en utilisant au moins une partie restante des données capturées par détection des données caractéristiques d'utilisateur représentant au moins une caractéristique physique de l'utilisateur dans les données d'imagerie à comparer avec des données caractéristiques attendues,
dans lequel les données caractéristiques d'utilisateur comprennent des données de reconnaissance faciale associées à une partie visible d'un visage pour l'utilisateur, dans lequel les données d'imagerie comprennent des données représentant au moins une partie dissimulée du visage de l'utilisateur.

2. Procédé (800) selon la revendication 1, dans lequel l'au moins un article porté par l'utilisateur comprend au moins une pièce d'équipement de protection individuelle.

3. Procédé (800) selon la revendication 1 ou 2, dans lequel les données décodables par machine comprennent une représentation de symbologie lisible par machine, une image, une image codée ou des données de texte détectables.

4. Procédé (800) selon l'une quelconque des revendications 1 à 3, dans lequel la validation (808) de l'identité d'utilisateur affirmée associée à l'utilisateur en utilisant au moins la partie restante des données capturées comprend en outre :
la comparaison (1004) des données caractéristiques d'utilisateur avec les données caractéristiques attendues associées à l'identité d'utilisateur affirmée pour l'au moins une caractéristique physique ; et
le fait de déterminer (1006) si la comparaison entre les données caractéristiques d'utilisateur et les données caractéristiques attendues indique une correspondance.

5. Procédé (800) selon la revendication 4, dans lequel les données caractéristiques d'utilisateur comprennent des données de mouvement de caractéristiques physiques associées à un nez de l'utilisateur, au moins un œil de l'utilisateur, une tête de l'utilisateur ou au moins un sourcil de l'utilisateur.

6. Procédé (800) selon l'une quelconque des revendications 1 à 5, dans lequel la détermination (806) de l'identité d'utilisateur affirmée associée à l'utilisateur par décodage des données décodables par machine comprend :
la détermination (902) d'un identifiant utilisateur par décodage des données décodables par machine ; et
la récupération (904) de l'identité d'utilisateur affirmée à partir d'un référentiel d'utilisateurs sur la base au moins en partie de l'identifiant d'utilisateur.

7. Procédé (800) selon l'une quelconque des revendications 1 à 6, dans lequel la validation (808) de l'identité d'utilisateur affirmée associée à l'utilisateur en utilisant au moins la partie restante des données capturées comprend :
la détection (1102) de données d'image d'arrière-plan dans les données d'imagerie ; et
le fait de valider (1104) que les données d'image d'arrière-plan correspondent aux données d'image d'arrière-plan attendues.

8. Procédé selon l'une quelconque des revendications 1 à 7, dans lequel la validation (808) de l'identité d'utilisateur affirmée associée à l'utilisateur en utilisant au moins la partie restante des données capturées comprend :
la détermination (1202) de données vocales d'utilisateur à partir des données capturées ; et
le fait de valider (1206) que les données vocales d'utilisateur correspondent aux données vocales attendues associées à l'identité d'utilisateur affirmée.

9. Procédé (800) selon l'une quelconque des revendications 1 à 8, dans lequel la réception (802) des données capturées associées à l'utilisateur comprend la capture des données capturées via au moins un capteur d'image.

10. Procédé (800) selon l'une quelconque des revendications 1 à 9, dans lequel les données décodables par machine comprennent un code OR.

11. Appareil (200) comprenant au moins un processeur (202) et au moins une mémoire (204), l'au moins une mémoire (204) ayant des instructions codées par ordinateur stockées sur celle-ci qui, sur exécution via l'au moins un processeur (202), configurent l'appareil (200) pour réaliser l'un quelconque des procédés selon les revendications 1 à 10.

12. Produit de programme informatique comprenant au moins un support de stockage lisible par ordinateur non transitoire sur lequel est stocké un code de programme informatique qui, sur exécution via au moins un processeur (202), réalise l'un quelconque des procédés selon les revendications 1 à 10.

13. Programme(s) informatique(s) comprenant des instructions qui, lorsqu'elles sont exécutées via au moins un processeur (202), amènent l'au moins un processeur (202) à réaliser l'un quelconque des procédés selon les revendications 1 à 10.
